(19) Europäisches Patentamt
European Patent Office
Office européen des brevets

(11) **EP 4 312 163 A1**

(12) **EUROPÄISCHE PATENTANMELDUNG**

(43) Veröffentlichungstag:
**31.01.2024 Patentblatt 2024/05**

(21) Anmeldenummer: **22187574.3**

(22) Anmeldetag: **28.07.2022**

(51) Internationale Patentklassifikation (IPC):
**G06N 7/00** *(2023.01)* **G06N 20/00** *(2019.01)*

(52) Gemeinsame Patentklassifikation (CPC):
**G06N 7/00;** G06N 20/00

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Deutsches Elektronen-Synchrotron
DESY
22607 Hamburg (DE)**

(72) Erfinder:
• **Santra, Robin
22607 Hamburg (DE)**
• **Geffert, Otfried
22607 Hamburg (DE)**

(74) Vertreter: **Eisenführ Speiser
Patentanwälte Rechtsanwälte PartGmbB
Johannes-Brahms-Platz 1
20355 Hamburg (DE)**

(54) **CHARAKTERISIERUNG EINES MESSVEKTORS MITTELS VECTOR SPACE NEWTON INTERPOLATION CAGE (VSNIC)**

(57) Die vorliegende Erfindung betrifft ein computerimplementiertes Verfahren zum Bestimmen eines Indikationsparameters $(y)$ eines Messvektors $(x)$, umfassend die Schritte: Erfassen (S1) des Messvektors $(x)$; Auswählen (S2) eines ersten Datenbankvektors $(x_1)$ und eines zweiten Datenbank-vektors $(x_2)$ aus einer Mehrzahl an Datenbankvektoren, die in einer Datenbank gespeichert sind, wobei das Auswählen des ersten Datenbankvektors $(x_1)$ aus der Datenbank so erfolgt, dass der erste Datenbankvektor $(x_1)$ ein Nächster-Nachbar des Messvektors $(x)$ ist, und das Auswählen des zweiten Datenbankvektors $(x_2)$ aus der Datenbank in Abhängigkeit des ersten Datenbankvektors $(x_1)$ und des Messvektors $(x)$ erfolgt, und dem ersten Datenbankvektor $(x_1)$ ein erster bekannter Referenzindikationsparameter $(yi)$ zugeordnet ist und dem zweiten Datenbankvektor $(x_2)$ ein zweiter bekannter Referenzindikationsparameter $(y_2)$ zugeordnet ist; Bestimmen (S3) einer Funktion, wobei die Funktion bestimmt wird in Abhängigkeit von dem ersten Datenbankvektor $(x_1)$, dem zweiten Datenbankvektor $(x_2)$, dem ersten bekannten Referenzindikationsparameter $(yi)$ und dem zweiten bekannten Referenzindikationsparameter $(y_2)$, nämlich so, dass das Auswerten der bestimmten Funktion an dem ersten Datenbankvektor $(x_1)$ den ersten bekannten Referenzindikationsparameter $(yi)$ gibt und das Auswerten der Funktion an dem zweiten Datenbankvektor $(x_2)$ den zweiten bekannten Referenzindikationsparameter $(y_2)$ gibt; und Bestimmen (S4) des Indikationsparameters $(y)$ durch Auswerten der bestimmten Funktion an dem Messvektor $(x)$.

Fig. 3

**Beschreibung**

Die vorliegende Erfindung betrifft ein computerimplementiertes Verfahren zum Bestimmen eines Indikationsparameters eines Messvektors. Zudem betrifft die vorliegende Erfindung eine Vorrichtung zum Bestimmen eines Indikationsparameters eines Messvektors. Zudem betrifft die vorliegende Erfindung ein Computerprogrammprodukt, ein computerlesbares Speichermedium, einen computerlesbaren Datenträger und ein Datenträgersignal.

Die vorliegende Erfindung bezieht sich grundsätzlich auf das Auswerten bzw. das Charakterisieren eines Messvektors, d. h. darauf, Eigenschaften eines unbekannten Messvektors zu bestimmen, um einen Rückschluss auf ein Objekt zu erlangen, das durch den Messvektor physikalisch oder datentechnisch beschrieben ist. Das zu charakterisierende Objekt kann beispielsweise ein physikalisches Objekt sein, das durch den Messvektor physikalisch beschrieben ist, wie z. B. ein Laserimpuls. Das Objekt kann auch ein Datenobjekt sein, das durch den Messvektor datentechnisch beschrieben ist, wie z. B. ein digitales Bild.

Die vorliegende Erfindung bezieht sich auf das spezielle technische Gebiet der Machine-Learning (ML)-Algorithmen.

ML-Algorithmen sind grundsätzlich bekannt. Beispielsweise sind Klassifikationsverfahren bekannt, die Methoden und Kriterien zur Einteilung (Klassifizierung) von Objekten oder Situationen in Klassen beschreiben. Neben den Klassifikationsverfahren sind auch andere ML-Algorithmen bekannt, mit denen Vorhersagen oder Interpolationen bestimmt werden.

Problematisch an bekannten ML-Algorithmen zur Charakterisierung von Messvektoren oder Messdaten ist dabei, dass diese teilweise zu ungenau sind. Beispielsweise kann es vorkommen, dass eine physikalische Größe eines physikalischen Objektes mit einem ML-Algorithmus zu ungenau bestimmt ist, wie z. B. eine zu ungenaue Bestimmung einer Impulsbreite eines Laserimpulses, oder, dass eine Ähnlichkeitsgröße eines Datenobjektes zu einem Vergleichsobjekt zu ungenau bestimmt ist und z. B. ein prozentualer Ähnlichkeitswert zu weit von einem Zielwert abweicht, der die Ähnlichkeit eines Bildes zu einem Vergleichsbild beschreibt.

Auch sind einige Machine-Learning-Algorithmen (ML-Algorithmen) nicht echtzeitfähig, da sie zu aufwändig zu berechnen sind oder die Algorithmen zu große Datenspeicherkapazitäten aufweisen, um in einer echtzeifähigen Hardware implementiert zu werden.

Als ein Ausgangspunkt für die technischen Überlegungen der Erfindung kann der bekannte ML-Algorithmus angesehen werden, der als Nächste-Nachbar-Methode (engl. "k-nearest neighbors algorithm") bekannt ist. Diese Methode wird nachfolgend auch als Nearest-Neighbor-Methode oder -Bestimmung bezeichnet. Bei dieser Methode wird, vereinfacht ausgedrückt, ein bekannter Messvektor aus gespeicherten und bekannten Messvektoren gesucht, der dem unbekannten Messvektor am ähnlichsten erscheint. Es zeigt sich dabei jedoch in der Praxis, dass der bestimmte Nächste-Nachbar, der mit der Nächsten-Nachbar-Methode bestimmt wird, deutlich von dem Messvektor abweichen kann. Besonders in einem Merkmalsraum mit weit auseinanderliegenden Messvektoren kann es vorkommen, dass ein vollständig falscher oder ungenauer Nächster-Nachbar bestimmt wird, da die Abstände der bekannten Messvektoren im Merkmalsraum zueinander zu groß sind. Die Nächste-Nachbar-Methode kann zwar einfach bestimmt werden, d. h. ohne viel Rechenaufwand, allerdings kann das Ergebnis der Auswertung ungenau sein.

Als ein weiterer Ausgangspunkt für die technischen Überlegungen der Erfindung kann zudem der bekannte ML-Algorithmus angesehen werden, der als künstliches neuronales Netz (KNN) (engl. "artificial neural network (ANN)") bekannt ist. Im Bereich des überwachten Lernens wird bei dieser Methode vereinfacht ausgedrückt ein KNN mit bekannten und gelabelten Trainingsdaten trainiert, bis in den Gewichten des KNN bestimmte Merkmale (Feature) implementiert sind. Es zeigt sich dabei jedoch in der Praxis, dass KNN zum einen eine zu niedrige Genauigkeit aufweisen können, insbesondere, wenn das sogenannte Overfitting vermieden werden soll, und dass KNN zum anderen rechenaufwändig und speicherintensiv sind, besonders, wenn große und tiefe KNN eingesetzt werden, die für eine Inferenz lange Zeit benötigen.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden, mit der ein unbekannter Messvektor möglichst einfach und mit einer hohen Genauigkeit charakterisierbar ist.

Zur Lösung der Aufgabe wird als ein erster erfindungsgemäßer Aspekt ein computerimplementiertes Verfahren zum Bestimmen eines Indikationsparameters eines Messvektors gemäß Anspruch 1 vorgeschlagen.

Das Verfahren zum Bestimmen eines Indikationsparameters eines Messvektors kann synonym auch als Verfahren zur Charakterisierung eines Messvektors verstanden werden.

Computerimplementiert bedeutet, dass das Verfahren dazu vorgesehen und eingerichtet ist, auf einem Computer bzw. einer Berechnungseinheit ausgeführt zu werden, d.h. es ist computergestützt. Das Verfahren kann beispielsweise mit einer CPU (Prozessor), mit einer GPU (Grafikprozessor) oder mit einem Mikrokontroller oder dergleichen ausgeführt werden.

Bestimmen kann generisch verstanden werden als Identifizieren, Berechnen, Charakterisieren oder Ableiten von Eigenschaften aus dem Messvektor.

Es wird also ein Messvektor charakterisiert bzw. Eigenschaften aus dem Messvektor mit dem Verfahren abgeleitet. Dazu wird ein Indikationsparameter des Messvektors bestimmt. Der Messvektor kann synonym als Merkmalsvektor verstanden werden. Der Messvektor umfasst Messdaten, die beliebig sein können. Der Messvektor fasst die parametrisierbaren Eigenschaften des zu bestimmenden Objektes in vektorieller Weise zusammen, d. h. er beschreibt - zumeist numerisch - das zu bestimmende Objekt bzw. dessen Eigenschaften. Der Messvektor kann beliebige Messdaten umfassen, beispielsweise gemessene Ionisationswahrscheinlichkeiten eines Laserimpulses. Der Messvektor kann beispielsweise auch eine Energie eines Sprachsignals (für die Spracherkennung), ein Frequenzspektrum, Grauwerte eines Bildes, Energie eines Bildes, Fourier-Koeffizienten eines Bildes (für die Bildverarbeitung), Buchstabenwahrscheinlichkeiten (für die Texterkennung), elektrische Größen, wie Spannung oder Strom, oder dergleichen umfassen. Der Messvektor kann auch Messdaten aus dem Bereich der Musterklassifikation bzw. -erkennung umfassen, d. h. Sprach-, Text-, Gesichtserkennung. Auch können Signalverläufe/-kurven oder Muster als Messvektor mit dem Verfahren charakterisiert werden, wie Autokorrelationsmuster.

Der Indikationsparameter kann als abgeleitete oder bestimmte Eigenschaft verstanden werden, die aus dem Messvektor bestimmt wird. Beispielsweise ist der Indikationsparameter eine physikalische Größe, wie eine Impulsbreite eines Laserimpulses. Aus dem unbekannten Messvektor wird in diesem Beispiel mit dem Verfahren der Indikationsparameter bzw. die Eigenschaft Impulsbreite des physikalischen Objektes Laserimpuls bestimmt und ausgegeben. In einem weiteren Beispiel ist der Indikationsparameter eine Ähnlichkeitsgröße, wie ein prozentualer Wert, der ein (digitales) Bild als Datenobjekt einer Datenklasse zuordnet, z. B. y=93% Datenklasse Katze. Aus dem unbekannten Messvektor wird in diesem weiteren Beispiel mit dem Verfahren der Indikationsparameter bzw. die Eigenschaft Klassenwahrscheinlichkeit des Datenobjektes Bild bestimmt und ausgegeben. Der Indikationsparameter kann also auch als Ausgabewert des Verfahrens oder als Eigenschaftswert oder Parameter des zu bestimmenden Objektes verstanden werden. Der Indikationsparameter ist indikativ für die Eigenschaften des zu bestimmenden Objektes und kennzeichnet dessen Eigenschaften oder Parameter. Der Messvektor und der Indikationsparameter können unterschiedlichen Typs sein. Dies meint, dass z. B. der Messvektor beliebige Messwerte umfassen kann und der Indikationsparameter eine aus den Messwerten abgeleitete Eigenschaft beschreibt. Als ein konkretes Beispiel wird erneut das Laserimpulsbeispiel herangezogen: Als Messwerte kann der Messvektor Ionisationswahrscheinlichen eines Laserimpulses umfassen und der Indikationsparameter kann eine daraus abgeleitete Eigenschaft des Laserimpulses sein, wie eine Impulsbreite. Ein weiteres Beispiel wäre, dass biomedizinische Kurven als Messvektor erfasst werden und daraus als Indikationsparameter ein Blutzuckerwert oder ein Hormonspiegel abgeleitet wird, der das zu untersuchende biomedizinische Objekt charakterisiert.

Grundsätzlich ist der vorgeschlagene ML-Algorithmus für die Charakterisierung beliebiger Messvektoren bzw. Messdaten geeignet. Die vorgeschlagene Erfindung kann also z. B. im Bereich der Bildverarbeitung und -auswertung, im Bereich der Messtechnik zu dem Bestimmen einer physikalischen Größe eines physikalischen Objektes, oder im Bereich der Datenanalyse zur Charakterisierung von Datenobjekten eingesetzt werden. Das Anwendungsgebiet der Erfindung ist also grundsätzlich beliebig.

Das Verfahren umfasst den Schritt Erfassen des Messvektors.

Erfassen kann generisch verstanden werden als Einlesen, Messen, Aufnehmen oder dergleichen. Es kann also beispielsweise eine Messeinrichtung vorgesehen sein, um den Messvektor zu erfassen. Der Messvektor kann aber auch bereits erfasst sein und in einem Datenspeicher bereitgestellt sein. In diesem Beispiel, kann der Schritt Erfassen des Messvektors als Einlesen des Messvektors aus einem Datenspeicher oder aus einer Messeinrichtung verstanden werden. Der Messvektor bzw. dessen Indikationsparameter sind unbekannt und werden durch die nachfolgend beschriebenen Schritte bestimmt bzw. charakterisiert. Der Messvektor kann beliebige Messdaten umfassen, wie zuvor beschrieben. Der Messvektor kann beispielweise daten- oder signaltechnisch in ein Berechnungsmittel eingelesen oder eingespeist werden, dass das Verfahren mit einem Berechnungsmodul ausführt. Als Modul kann ein Softwaremodul (Computerprogrammprodukt) oder ein Hardwaremodul oder eine Mischung aus beiden Modulen vorgesehen sein. Beispielsweise ist der Messvektor ein Vektor mit 51 Messwerten bzw. Einträgen, wobei jeder Messwert eine Ionisationswahrscheinlichkeit beschreibt, die mittels Autotorrelation bestimmt wurden.

Das Verfahren umfasst zudem den Schritt Auswählen eines ersten Datenbankvektors und eines zweiten Datenbankvektors aus einer Mehrzahl an Datenbankvektoren, die in einer Datenbank gespeichert sind, wobei das Auswählen des ersten Datenbankvektors aus der Datenbank so erfolgt, dass der erste Datenbankvektor ein Nächster-Nachbar des Messvektors ist.

Es wird also vorgeschlagen, dass eine Datenbank bereitgestellt wird, in der weitere Messvektoren bzw. Messdaten gespeichert sind. Der Schritt Auswählen umfasst also einen zusätzlichen Schritt, nämlich Bereitstellen einer Datenbank in derwenigstens ein erster, zweiter und optional dritter Datenbankvektor bereitgestellt sind, wobei den Datenbankvektoren jeweils ein bekannter Referenzindikationsparameter zugeordnet ist. Die Datenbank kann auch synonym als Datenspeicher oder Vergleichsdatenbank verstanden werden. Die Messvektoren aus der Datenbank sind bekannt d. h. die Indikationsparameter bzw. die Eigenschaften der Messvektoren aus der Datenbank sind ganz oder teilweise bekannt. Das Auswählen kann beispielsweise mittels Indizierung oder Abfrage der Messvektoren aus der Datenbank erfolgen. Aus der Datenbank, die auch als Vergleichsdatenbank oder Messdatenbank verstanden werden kann, werden also wenigstens zwei bekannte Messvektoren ausgewählt. Es können auch drei oder mehr Messvektoren zur Bestimmung des Indikationsparameters des unbekannten Messvektors ausgewählt werden.

Das Auswählen des ersten Datenbankvektors aus der Datenbank erfolgt dabei so, dass dieser ein Nächster-Nachbar zu dem bestimmten Messvektor ausbildet. Dies kann auch als ein Bestimmen eines Nächster-Nachbarn zu dem Messvektor aufgefasst werden. Der erste Datenbankvektor bildet also den Nächsten-Nachbarn zu dem Messvektor aus und es wird vorzugsweise eine Bestimmung des Nächsten-Nachbarn zu dem Messvektor ausgeführt. Die Nächste-Nachbar-Methode ist dabei grundsätzlich bekannt. Es wird also vorgeschlagen, dass als erster Datenbankvektor derjenige Vektor aus der Datenbank ausgewählt wird, der den geringsten (euklidischen) Abstand zu dem Messvektor (in einem Merkmalsraum) aufweist. Der bzw. die Datenbankvektoren und der Messvektor sind typgleich, d. h. umfasst zum Beispiel der Messvektor ein Autokorrelationsmuster, umfassen auch die Datenbankvektoren ein Autokorrelationsmuster. Der erste Datenbankvektor wird also z. B. durch Abstandsminimierung bestimmt, nämlich durch Minimierung einer euklidischen Distanz. In anderen Worten wird also zu dem Messvektor der Nächste-Nachbar aus der Datenbank bestimmt und als erster Datenbankvektor ausgewählt.

Zudem erfolgt das Auswählen des zweiten Datenbankvektors aus der Datenbank in Abhängigkeit des ersten Datenbankvektors und des Messvektors.

Es wird also vorgeschlagen, dass ein weiterer Datenbankvektor ausgewählt wird, nämlich der zweite Datenbankvektor. Das Auswählen des zweiten Datenbankvektors kann beliebig erfolgen, jedoch mit der Einschränkung, dass das Auswählen in Abhängigkeit von dem ersten Datenbankvektor und dem Messvektor erfolgt. Dies kann auch verstanden werden als Konstruieren, Berechnen, Suchen oder Bestimmen des zweiten Datenbankvektors auf Basis des ersten Datenbankvektors und des Messvektors. Der zweite Datenbankvektor wird also in Abhängigkeit des Nächsten-Nachbarn zu dem Messvektor bestimmt, d. h. in Abhängigkeit von dem ersten Datenbankvektor und vom dem Messvektor. Es wird also vorgeschlagen, einen zusätzlichen zweiten Datenbankvektor zu bestimmten und nicht nur einen, wie bei der Nächsten-Nachbar-Methode aus dem Stand der Technik bekannt. Bevorzugt erfolgt das Auswählen des zweiten Datenbankvektors in Abhängigkeit des ersten Datenbankvektors und des Messvektors so, dass der zweite Datenbankvektor in Bezug auf den Messvektor dem ersten Datenbankvektor in einem Merkmalsraum gegenüberliegt, so dass der Messvektor im Wesentlichen zwischen dem ersten Datenbankvektor und dem zweiten Datenbankvektor in dem Merkmalsraum angeordnet ist.

Dem ersten Datenbankvektor ist dabei ein erster bekannter Referenzindikationsparameter zugeordnet und dem zweiten Datenbankvektor ist ein zweiter bekannter Referenzindikationsparameter zugeordnet.

Es wird also vorgeschlagen, dass der erste und der zweite Datenbankvektor, die in der Datenbank bereitgestellt sind, bekannte Eigenschaften aufweisen, die als Referenzindikationsparameter bezeichnet werden und dem Datenbankvektoren zugeordnet sind.

Als ein Beispiel kann der erste Datenbankvektor eine Vielzahl von Messwerten aufweisen, wobei die Messwerte ein Autokorrelationsmuster mit Ionisationswahrscheinlichkeiten beschreiben. Das Autokorrelationsmuster des ersten Datenbankvektors ist bekannt und diesem wurde beispielsweise eine erste bekannte Impulsbreite als Referenzindikationsparameter zugeordnet. Weiter kann in diesem Beispiel der zweite Datenbankvektor ebenfalls eine Vielzahl von Messwerten aufweisen, wobei die Messwerte ein Autokorrelationsmuster mit Ionisationswahrscheinlichkeiten beschreiben. Das Autokorrelationsmuster des zweiten Datenbankvektors ist ebenfalls bekannt und diesem wurde beispielsweise eine zweite bekannte Impulsbreite als Referenzindikationsparameter zugeordnet. Es wird also vorzugsweise vorgeschlagen, dass die Datenbankvektoren Vergleichsdaten in Form von bekannten Mustern umfassen, beispielsweise Autokorrelationsmuster oder dergleichen. Diesen Mustern sind bekannte Referenzindikationsparameter zugeordnet und darauf basierend wird der unbekannte Indikationsparameter des Messvektors bestimmt. Die Referenzindikationsparameter können auch als bekannte Merkmale oder Eigenschaften verstanden werden.

Die Eigenschaften bzw. die Indikationsparameter der Datenbankvektoren sind also bekannt. Diese werden als Referenzindikationsparameter bezeichnet, da diese als Referenz für die Bestimmung des Indikationsparameters des Messvektors verwendet werden. Die Datenbankvektoren können also auch als bekannte Stütz- oder Referenzvektoren aufgefasst werden. Diese dienen als Vergleichspunkte oder Stützpunkte, um den Indikationsparameter des Messvektors zu bestimmen. Es werden also Vergleichsdaten oder Vergleichsmuster in Form der Datenbankvektoren bereitgestellt, die bekannt sind und dazu eingesetzt werden, den Messvektor zu charakterisieren.

Es versteht sich zudem, dass wenigstens ein erster Datenbankvektor und ein zweiter Datenbankvektor aus der Mehrzahl an Datenbankvektoren ausgewählt werden, die in einer Datenbank gespeichert sind, d.h. das Verfahren kann auch mit mehr als zwei Datenbankvektoren durchgeführt werden, beispielsweise mit drei oder mehr Datenbankvektoren. Vorzugsweise wird das Verfahren mit wenigstens drei Datenbankvektoren durchgeführt, wie nachfolgend beschrieben.

Das Verfahren umfasst zudem den Schritt Bestimmen einer Funktion, wobei die Funktion bestimmt wird in Abhängigkeit von dem ersten Datenbankvektor, dem zweiten Datenbankvektor, dem ersten bekannten Referenzindikationsparameter und dem zweiten bekannten Referenzindikationsparameter. Es wird demnach vorgeschlagen, dass eine Funktion, die auch als Funktionsgleichung oder Berechnungsvorschrift verstanden werden kann, berechnet wird, und die Funktion zur Berechnung wenigstens den ersten und zweiten Datenbankvektor und den ersten und zweiten Referenzindikationsparameter umfasst. Es wird also in anderen Worten vorgeschlagen, eine Funktion zu bestimmen, d. h. im Sinne eines Auswertens oder Berechnens, die die Datenbankvektoren und die entsprechend bekannten Referenzindikationsparameter berücksichtigt. Der Schritt Bestimmen einer Funktion kann also auch als Berechnen einer Funktion mit vorbestimmten Eigenschaften verstanden werden. Die Funktion kann beispielsweise eine Interpolationsfunktion sein, die den interpolierten Indikationsparameter ausgibt oder eine Gewichtungsfunktion, die eine Wahrscheinlichkeit ausgibt, oder dergleichen. Das Bestimmen der Funktion kann auch als Aufrufen oder Ausführen einer festgelegten Funktion verstanden werden. Die Funktion weist bestimmte Eigenschaften auf, die nachfolgend beschrieben sind. Die Funktion ist beispielsweise als Berechnungsvorschrift oder Algorithmus in einem Berechnungsmittel hinterlegt. Die Funktion kann beispielsweise als Code in einem Softwareprogramm hinterlegt sein. Die Funktion weist dabei festgelegte Eigenschaften auf, die nachfolgend beschrieben sind. Die Funktion kann auch synonym als Näherungsfunktion bezeichnet werden.

Die Funktion wird oder ist so bestimmt, dass das Auswerten der bestimmten Funktion an dem ersten Datenbankvektor den ersten bekannten Referenzindikationsparameter gibt und das Auswerten der Funktion an dem zweiten Datenbankvektor den zweiten bekannten Referenzindikationsparameter gibt. Es wird also vorgeschlagen, dass die Funktion den ersten oder zweiten Referenzindikationsparameter ausgibt, wenn die Funktion an dem ersten oder zweiten Datenbankvektor ausgewertet wird. Wird die Funktion z. B. an dem ersten Datenbankvektor ausgewertet, gibt die Funktion den bekannten Referenzindikationsparameter als Ausgabewert aus. Wird die Funktion z. B. an dem zweiten Datenbankvektor ausgewertet, gibt die Funktion den bekannten Referenzindikationsparameter als Ausgabewert aus. Die Funktion verläuft bildlich gesprochen also durch den ersten Datenbankvektor und den zweiten Datenbankvektor hindurch. Die Funktion kann beispielweise eine lineare, quadratische oder höherdimensionale Funktion sein, beispielsweise eine Interpolationsfunktion oder eine Gewichtungsfunktion, die eine Wahrscheinlichkeit ausgibt. Durch diese besonderen Eigenschaften der Funktion kann der Indikationsparameter des Messvektors über wenigstens die beiden Datenbankvektoren bestimmt werden, die aufgrund der Nearest-Neighbor Bestimmung des ersten Datenbankvektors in der Nähe des Messvektors liegen. Es wird also vorgeschlagen, eine Nearest-Neighbor-Bestimmung mit einer speziellen Näherungsfunktion zu kombinieren, um den Indikationsparameter des Messvektors zu bestimmen.

Das Verfahren umfasst zudem den Schritt Bestimmen des Indikationsparameters durch Auswerten der bestimmten Funktion an dem Messvektor. Es wird also vorgeschlagen, dass die Funktion, die die Datenbankvektoren mit den bekannten Referenzindikationsparametern berücksichtigt, verwendet wird, um den Indikationsparameters des Messvektors als Ausgabewert auszugeben. Dazu wird vorgeschlagen, den Indikationsparameter durch Auswertung der bestimmten Funktion an dem Messvektor auszuwerten. Das Ergebnis der Auswertung ist also der Indikationsparameter. Wird der Indikationsparameter des Messvektors beispielsweise als y beschrieben, gilt $y = f(x, x_{1,NN}, y_1, x_2, y_2)$, wobei x der Messvektor ist, $x_{1,NN}$ der erste Datenbankvektor ist, der der Nächste-Nachbar zu dem Messvektor x ist, $y_1$ der erste Referenzindikationsparameter ist, $x_2$ der zweite Datenbankvektor ist und $y_2$ der zweite Referenzindikationsparameter ist.

Zusammengefasst wird also vorgeschlagen, dass zuerst ein Messvektor bestimmt oder eingelesen wird. Anschließend wird ein erster Datenbankvektor aus einer Datenbank mit bekannten Datenbankvektoren bestimmt, der den Nächsten-Nachbarn zu dem Messvektor ausbildet. Anschließend wird aus oder mit dem Messvektor und dem ersten Datenbankvektor ein zweiter Datenbankvektor bestimmt bzw. ausgewählt. Die beiden ausgewählten bekannten Datenbankvektoren werden anschließend in einer Funktion verwendet, um den Indikationsparameter des unbekannten Messvektors zu bestimmen und als Ausgabewert bereitzustellen.

Im Kern wird also ein ML-Algorithmus vorgeschlagen, der auf Basis eines bestimmten Nächsten-Nachbarn und wenigstens einem Zusatzvektor, eine Funktion nutzt, um den unbekannten Indikationsparameter des Messvektors zu bestimmen. Es konnte festgestellt werden, dass mit der vorgeschlagenen Methode ein sehr einfacher und genauer ML-Algorithmus bereitgestellt ist. Im Vergleich zu der Nächsten-Nachbar-Methode können wesentlich genauere Ergebnisse erzielt werden. Z. B. wurde der vorgeschlagene Algorithmus zur Auswertung einer Impulsdauer, einer Spektralen und einer Phasenverschiebung von zeitlich kurzen Laserimpulsen getestet und die Eigenschaften des Laserimpulses konnten genauer bestimmt werden als z. B. mit der Nächsten-Nachbar-Methode. Es wird also ein Algorithmus vorgeschlagen, der die Nächste-Nachbar-Methode zwar nutzt, diese aber weiterentwickelt. Zudem ist die Berechnung und der Speicheraufwand des vorgeschlagenen Verfahrens deutlich geringer als z. B. bei künstlichen neuronalen Netzen. Ein weiterer Vorteil ist, dass der ML-Algorithmus nachvollziehbar ist und kein Blackbox-Prinzip vorliegt, wie bei KNN. Eine Nachvollziehbarkeit ist somit auch gegeben.

Vorzugsweise umfasst das Verfahren den zusätzlichen Schritt Auswählen eines dritten Datenbankvektors aus der Mehrzahl an Datenbankvektoren, wobei das Auswählen des dritten Datenbankvektors aus der Datenbank in Abhängigkeit des ersten Datenbankvektors, des zweiten Datenbankvektors und des Messvektors erfolgt, wobei dem dritten Datenbankvektor ein dritter bekannter Referenzindikationsparameter zugeordnet ist.

Es wird also vorgeschlagen, dass ein dritter Datenbankvektor so ausgewählt wird, ähnlich wie zuvor zum zweiten Datenbankvektor beschrieben. Durch die Verwendung eines dritten Datenbankvektors wird die Genauigkeit des Verfahrens noch weiter erhöht. Der dritte Datenbankvektor ist wie der erste und zweite Datenbankvektor bekannt und dessen Referenzindikationsparameter ist ebenfalls bekannt. Das Auswählen des dritten Datenbankvektors kann beliebig erfolgen, jedoch mit der Einschränkung, dass das Auswählen in Abhängigkeit von dem ersten und zweiten Datenbankvektor und dem Messvektor erfolgt. Dies kann auch verstanden werden als Konstruieren, Berechnen, Suchen oder Bestimmen des dritten Datenbankvektors auf Basis des ersten und zweiten Datenbankvektors und des Messvektors. Der dritte Datenbankvektor wird also in Abhängigkeit von dem Nächsten-Nachbarn zu dem Messvektor bestimmt, d. h. in Abhängigkeit von dem ersten Datenbankvektor, und von dem zweiten Datenbankvektor und von dem Messvektor.

Zudem wird bevorzugt vorgeschlagen, dass die Funktion bestimmt wird in Abhängigkeit von dem ersten, zweiten und dritten Datenbankvektor und dem ersten, zweiten und dritten bekannten Referenzindikationsparameter, und das Auswerten der Funktion an dem dritten Datenbankvektor den dritten bekannten Referenzindikationsparameter gibt. Es wird also ein dritter Datenbankvektor mit bekanntem Referenzindikationsparameter zur Bestimmung des Indikationsparameters des Messvektors genutzt, wie analog vorstehend zum ersten und zweiten Datenbankvektor beschrieben. Wird die Funktion an dem dritten Datenbankvektor ausgewertet, gibt die Funktion als Ergebnis den dritten Referenzindikationsparameter. Der Wortlaut "gibt" im Zusammenhang der Auswertung kann auch als ergibt verstanden werden. Der dritte Referenzindikationsparameter wird also ausgegeben, wenn die Funktion an dem dritten Datenbankvektor bestimmt wird. Die Funktion verläuft bildlich gesprochen also durch den ersten Datenbankvektor und den zweiten Datenbankvektor und den dritten Datenbankvektor hindurch.

Besonders bevorzugt werden der erste, zweite und dritte Datenbankvektor derart ausgewählt, dass diese einen Raum in einem Messvektorraum aufspannen, welcher den Messvektor vollständig oder teilweise umgibt.

Es wird in dieser besonders bevorzugten Ausführungsform also vorgeschlagen, dass der der erste, zweite und dritte Datenbankvektor derart ausgewählt werden, dass diese einen Raum in einem Messvektorraum aufspannen, welcher den Messvektor vollständig oder teilweise umgibt. Umgeben kann auch als umschließen verstanden werden. Dies ist bildlich vorstellbar als eine Art Käfig, der um den unbekannten Messvektor aufgespannt wird. Innerhalb dieses Käfigs ist der Messvektor im Messvektorraum angeordnet. Der Messvektorraum kann auch als Merkmalsraum aufgefasst werden und beschreibt einen mehrdimensionalen Raum. Wird beispielsweise als Funktion eine Interpolationsfunktion eingesetzt und der erste, zweite und dritte Datenbankvektor durch eine Abstandsminimierung mit einem quadratischen Netwonpolynom bestimmt, kann dieser Käfig auch als Newton-Vektorraum-Interpolationskäfig (engl. "Vector Space Newton Interpolation Cage (VSNIC)") bezeichnet werden. Durch die Anordnung des Messvektors innerhalb des Raumes zwischen den Datenbankvektoren, lässt sich der Messvektor besonders gut annähern und dessen Indikationsparameter genau bestimmen. Durch die Verwendung des Vektorkäfigs wird also eine besonders genaue Bestimmung des Indikationsparameters bereitgestellt. Zudem kann die Bestimmung bzw. Berechnung des Indikationsparameters ohne viel Rechenaufwand bestimmt werden.

Vollständig oder teilweise umgibt meint dabei im Allgemeinen, dass der Messvektor von dem Raum, der von dem ersten Datenbankvektor $x_1$, dem zweiten Datenbankvektor $x_2$ und dem dritten Hilfsvektor $x_3'$ aufgespannt wird (per Konstruktion) vollständig umschlossen wird. Da der dritte Datenbankvektor $x_3$ durch Abstandsminimierung gegenüber dem dritten Hilfsvektor $x_3'$ bestimmt wird, kann es jedoch vorkommen, dass der Messvektor nur teilweise von dem Raum umschlossen wird, der von den drei Datenbankvektoren $x_1$, $x_2$ und $x_3$ aufgespannt wird.

Es versteht sich zudem, dass in einem systematischen Verfahren zudem noch weitere Datenbankvektoren bestimmt werden können, z. B. ein vierter und fünfter Datenbankvektor $x_4$ und $x_5$, um den Messvektor x zunehmend besser zu umringen. Dadurch kann ein Raum konstruiert werden, aus dem der Messvektor x weniger und weniger herausragt und damit der Indikationsparameter des Messvektors x besonders genau bestimmt werden.

Vorzugsweise wird vorgeschlagen, dass der erste Datenbankvektor, der zweite Datenbankvektor und/oder der dritte Datenbankvektor durch Abstandsminimierung bestimmt werden. Es wird also vorgeschlagen, dass der erste Datenbankvektor durch Abstandsminimierung bestimmt sind. Es wird also der erste Datenbankvektor gesucht, der einen minimalen (euklidischen) Abstand zu dem Messvektor in dem Messvektorraum aufweist. Der erste Datenbankvektor ist damit der Datenbankvektor mit dem kleinsten Abstand zu dem Messvektor. Der minimierte erste Datenbankvektor dient dann mit dem Messvektor als Ausgangspunkt, um den zweiten Datenbankvektor zu konstruieren bzw. zu bestimmen. Zudem können auch der zweite Datenbankvektor und der dritte Datenbankvektor durch eine Abstandsminimierung bestimmt werden. Der zweite Datenbankvektor kann z. B. durch Minimierung eines Abstands zu einem zweiten Hilfsvektor bestimmt werden. Der dritte Datenbankvektor kann z. B. durch Minimierung eines Abstands zu einem dritten Hilfsvektor bestimmt werden. Die Minimierung eines Abstands ist dabei grundsätzlich bekannt und es kommen verschiedene Berechnungsmöglichkeiten in Betracht.

In einer besonders bevorzugten Ausführungsform wird der erste Datenbankvektor $x_1$ durch Abstandsminimie-rung einer euklidischen Distanz d zu dem Messvektor x bestimmt, die beschreibbar ist als

$$d = |\,x - x_1| = \sqrt{\sum_{i=1}^{n}\big(x^{(i)} - x_1^{(i)}\big)^2}.$$

In einer besonders bevorzugten Ausführungsform wird der zweite Datenbankvektor $x_2$ durch Abstandsminimierung einer euklidischen Distanz d zu einem zweiten Hilfsvektor $x'_2$ bestimmt, die beschreibbar ist als

$$d = |\,x'_2 - x_2| = \sqrt{\sum_{i=1}^{n}\big(x'^{(i)}_2 - x_2^{(i)}\big)^2}.$$

In einer besonders bevorzugten Ausführungsform wird der dritte Datenbankvektor $x_3$ durch Abstandsminimierung einer euklidischen Distanz d zu einem dritten Hilfsvektor $x'_3$ bestimmt, die beschreibbar ist als

$$d = |\,x'_3 - x_3| = \sqrt{\sum_{i=1}^{n}\big(x'^{(i)}_3 - x_3^{(i)}\big)^2}.$$

Vorzugsweise wird zusätzlich oder alternativ vorgeschlagen, dass die Funktion eine Interpolationsfunktion ist. Es wird also vorgeschlagen, dass die Funktion wenigstens den ersten Datenbankvektor, den zweiten und optional den dritten Datenbankvektor benutzt. Die Interpolation ist eine Art der Approximation, d. h. die betrachtete Funktion wird durch die Interpolationsfunktion in den Stützstellen exakt wiedergegeben und in den restlichen Punkten näherungsweise. Vorliegend sind die Stützstellen also die bekannten Datenbankvektoren und an den Stützstellen werden die bekannten Referenzindikationsparameter exakt wiedergegeben. In den restlichen Punkten, zwischen den Datenbankvektoren, die in der Nähe des Messvektors liegen, wird der Indikationsparameter des Messvektors dann näherungsweise ausgegeben. Es wird also der Indikationsparameter y für den unbekannten Messvektor x interpoliert.

In einer besonders bevorzugten Ausführungsform wird vorgeschlagen, dass die Interpolationsfunktion ein quadratisches Newton Polynom, ein Lagrange-Polynom oder dergleichen ist. Diese Arten der Interpolationen sind grundsätzlich bekannt. Besonders vorteilhaft ist das quadratisches Newton Polynom als Interpolationsfunktion, da es einen Kompromiss zwischen Stabilität der Berechnung und Genauigkeit der Berechnung schafft. Zudem ist vorteilhaft, dass anders als bei Lagrange-Interpolations-Polynomen, sich bei der Newton-Interpolation weitere Datenbankvektoren ohne Redundanzen hinzufügen lassen.

Vorzugsweise wird zusätzlich oder alternativ vorgeschlagen, dass die Funktion eine relative Gewichtungsfunktion ist, wobei die Gewichtsfunktion ausgebildet ist aus Distanzen und Winkeln der Datenbankvektoren und des Messvektors untereinander. Es wird darauf hingewiesen, dass die Gewichtungsfunktion nicht mit der Gewichtsfunktion zu verwechseln ist, die auch als Impulsantwort bekannt ist.

Vorzugsweise umfasst das Auswählen des zweiten Datenbankvektors das Auswählen des zweiten Datenbankvektors aus der Mehrzahl an Datenbankvektoren als den nächsten Nachbarn eines zweiten Hilfsvektors. Es wird also vorgeschlagen, dass der zweite Datenbankvektor ebenfalls mit der Nächsten-Nachbar-Methode bestimmt wird und zwar wird der zweite Datenbankvektor in Bezug zu einem zweiten Hilfsvektor bestimmt. Der zweite Hilfsvektor kann auch als ein fiktiver Stützvektor verstanden werden. Der zweite Hilfsvektor wird beispielsweise bestimmt, indem der zweite Hilfsvektor in einem Messvektorraum dem ersten Datenbankvektor in Bezug auf den Messvektor gegenüberliegt.

Vorzugsweise umfasst das Auswählen des dritten Datenbankvektors das Auswählen des dritten Datenbankvektors aus der Mehrzahl an Datenbankvektoren als den nächsten Nachbarn eines dritten Hilfsvektors. Es wird also vorgeschlagen, dass der dritte Datenbankvektor ebenfalls mit der Nächster-Nachbar-Methode bestimmt wird und zwar wird der dritte Datenbankvektor in Bezug zu einem dritten Hilfsvektor bestimmt. Der dritte Hilfsvektor kann auch als fiktiver Stützvektor verstanden werden. Der dritte Hilfsvektor wird beispielsweise bestimmt, indem der dritte Hilfsvektor in einem Messvektorraum einem vierten Hilfsvektor in Bezug auf den Messvektor gegenüberliegt.

Besonders bevorzugt werden der erste und zweite und optional der dritte Datenbankvektor derart ausgewählt, dass diese einen Raum in einem Messvektorraum aufspannen, welcher den Messvektor umgibt. Dies ist bildlich vorstellbar als eine Art minimierter Käfig, der um den unbekannten Messvektor aufgespannt wird. Innerhalb dieses minimierten Käfigs ist der Messvektor im Messvektorraum angeordnet. Durch die Anordnung des Messvektors in dem Käfig lässt sich eine besonders hohe Genauigkeit bei der Bestimmung des Indikationsparameters des Messvektors erzielen.

In einer bevorzugten Ausführungsform wird der zweite Datenbankvektor $x_2$ bei einer Interpolation so ausgewählt, dass das Skalarprodukt des Messvektors x, des ersten Datenbankvektors $x_1$ und des zweiten Datenbankvektors $x_2$ die folgende Bedingung erfüllt $(x_2 - x) \cdot (x_1 - x) < 0$.

Durch Einhaltung dieser Bedingung wird gewährleitet, dass der zweite Datenbankvektor gegenüberliegend zu dem ersten Datenbankvektor in einem Bereich des Merkmalsraumes angeordnet ist, in dem das Skalarprodukt kleiner ist als null. Damit wird ein genaues Ergebnis der Interpolation gewährleistet.

In einer bevorzugten Ausführungsform wird der dritte Datenbankvektor $x_3$ bei einer Interpolation so ausgewählt, dass das Skalarprodukt des Messvektors x, des dritten Datenbankvektors $x_3$ und eines vierten Hilfsvektors $x_{12}$ die folgende Bedingung erfüllt: $(x_3 - x) \cdot (x_{12} - x) < 0$.

Durch Einhaltung dieser Bedingung wird gewährleitet, dass der dritte Datenbankvektor gegenüberliegend zu dem vierten Hilfsvektor in einem Bereich des Merkmalsraumes angeordnet ist, in dem das Skalarprodukt kleiner ist als null. Damit wird ein genaues Ergebnis der Interpolation gewährleistet.

Vorzugsweise wird der zweite Hilfsvektor konstruiert in Abhängigkeit von dem ersten Datenbankvektor und dem Messvektor. Es wird also ein Hilfsvektor konstruiert, der nicht in der Datenbank als Datenbankvektor gespeichert ist, sondern der als eine Art Konstruktionspunkt oder Ausgangspunkt für die Bestimmung des zweiten Datenbankvektors verwendet wird. Der zweite Hilfsvektor kann auf eine beliebige Art und Weise konstruiert werden, jedoch mit der Einschränkung, dass dieser abhängig von dem ersten Datenbankvektor und dem Messvektor bestimmt wird.

Besonders bevorzugt wird der zweite Hilfsvektor so konstruiert, dass der zweite Hilfsvektor in einem Messvektorraum dem ersten Datenbankvektor in Bezug auf den Messvektor gegenüberliegt. Es wird also vorgeschlagen, dass der zweite Hilfsvektor so in Abhängigkeit von dem ersten Datenbankvektor und dem Messvektor konstruiert wird, dass der Messvektor im Wesentlichen zwischen dem zweiten Hilfsvektor und dem ersten Datenbankvektor angeordnet ist. Damit wird eine besonders genaue Bestimmung des Indikationsparameters des Messvektors bereitgestellt.

In einer weiteren bevorzugten Ausführungsform wird der zweite Hilfsvektor so konstruiert, dass der Abstand zwischen dem Messvektor und dem zweiten Hilfsvektor identisch ist zu dem Abstand zwischen dem Messvektor und dem ersten Datenbankvektor, und wobei eine erste Gerade, welche durch den Messvektor und den ersten Datenbankvektor bestimmt ist, den zweiten Hilfsvektor umfasst. Es wird also vorgeschlagen, dass der zweite Hilfsvektor so konstruiert wird, dass er auf einer Geraden liegt, die den Messvektor und den ersten Datenbankvektor umfasst bzw. die Gerade durch diese Vektoren verläuft. Der identische Abstand ist ein optionales Merkmal. Der zweite Hilfsvektor weist damit einen gleichen Abstand zu dem Messvektor wie der erste Datenbankvektor zu dem Messvektor auf und der zweite Hilfsvektor ist in Bezug auf den Messvektor gegenüberliegend zu dem ersten Datenbankvektor angeordnet. Der Messvektor liegt damit in einem Zentrumsbereich zwischen dem ersten Datenbankvektor und dem zweiten Hilfsvektor.

Besonders bevorzugt wird der zweite Hilfsvektor $x'_2$ in Abhängigkeit von dem ersten Datenbankvektor $x_1$ und dem Messvektor x so konstruiert, dass er durch die Funktion

$$x'_2 = x + \gamma(x - x_1)$$

bestimmt ist, wobei $y$ ein Faktor ist, insbesondere ist der Faktor $y = 1$ und $x_2'$ ergibt sich zu $x_2' = 2x - x_1$.

Die Formel zur Bestimmung des zweiten Hilfsvektors $x_2'$ kann auch als eine erste Geradengleichung aufgefasst werden, die abhängig ist von dem Messvektor und dem ersten Datenbankvektor. Durch die Einhaltung der ersten Geradengleichung wird erreicht, dass der zweite Hilfsvektor $x_2'$ dem ersten Datenbankvektor $x_1$ gegenüberliegt. Wird y als 1 gewählt, liegt ein identischer Abstand zwischen dem ersten Datenbankvektor $x_1$ und dem Messvektor x vor sowie zwischen dem zweiten Hilfsvektor $x_2'$ und dem Messvektor x. Damit wird gewährleistet, dass der Messvektor in einem Zentrumsbereich zwischen dem zweiten Hilfsvektor $x_2'$ und dem ersten Datenbankvektor $x_1$ angeordnet ist.

Vorzugsweise wird der dritte Hilfsvektor konstruiert in Abhängigkeit von einem vierten Hilfsvektor und dem Messvektor. Es wird also ein dritter Hilfsvektor konstruiert, der nicht in der Datenbank als Datenbankvektor gespeichert ist, sondern der als eine Art Konstruktionspunkt oder Ausgangspunkt für die Bestimmung des dritten Datenbankvektors verwendet wird. Der dritte Hilfsvektor kann auf eine beliebige Art und Weise konstruiert werden, jedoch mit der Einschränkung, dass dieser abhängig von einem vierten Hilfsvektor und dem Messvektor bestimmt wird.

Besonders bevorzugt wird der dritte Hilfsvektor so konstruiert, dass der dritte Hilfsvektor in einem Messvektorraum dem vierten Hilfsvektor in Bezug auf den Messvektor gegenüberliegt. Es wird also ähnlich wie bei der Konstruktion des zweiten Hilfsvektors vorgeschlagen, den dritten Hilfsvektor so zu konstruieren, dass er dem vierten Hilfsvektor gegenüberliegt liegt, um den Messvektor zwischen dem vierten und dritten Hilfsvektor anzuordnen.

In einer weiteren bevorzugten Ausführungsform wird der dritte Hilfsvektor so konstruiert, dass der Abstand zwischen dem Messvektor und dem dritten Hilfsvektor identisch ist zu dem Abstand zwischen dem Messvektor und dem vierten Hilfsvektor, und wobei eine zweite Gerade, welche durch den Messvektor und den vierten Hilfsvektor bestimmt ist, den dritten Hilfsvektor umfasst. Es wird also vorgeschlagen, dass der dritte Hilfsvektor so konstruiert wird, dass er auf einer Geraden liegt, die den Messvektor und den vierten Hilfsvektor umfasst bzw. die Gerade durch diese Vektoren verläuft. Der identische Abstand ist ein optionales Merkmal. Der dritte Hilfsvektor weist damit einen gleichen Abstand zu dem Messvektor wie der vierte Hilfsvektor zu dem Messvektor auf und der dritte Hilfsvektor ist in Bezug auf den Messvektor gegenüberliegend zu dem vierten Hilfsvektor angeordnet. Der Messvektor liegt damit in einem Zentrumsbereich zwischen dem dritten Hilfsvektor und dem vierten Hilfsvektor.

Besonders bevorzugt wird der dritte Hilfsvektor $x_3'$ in Abhängigkeit von einem vierten Hilfsvektor $x_{12}$ und dem

Messvektor x so konstruiert, dass er durch die Funktion

$$x'_3 = x + \gamma(x - x_{12})$$

bestimmt ist, wobei $y$ ein Faktor ist, insbesondere ist der Faktor y = 1 und $x_3$' ergibt sich zu $x_3$' = 2x - $x_{12}$.

Die Formel zur Bestimmung des dritten Hilfsvektors kann auch als eine zweite Geradengleichung aufgefasst werden, die abhängig ist von dem Messvektor und dem vierten Hilfsvektor.

Besonders bevorzugt gilt für den Messvektor x, den ersten Datenbankvektor $x_1$, den zweiten Datenbankvektor $x_2$ und den vierten Hilfsvektor $x_{12}$ die folgende Bedingung (x - $x_{12}$) · ($x_2$ - $x_1$) = 0.

Durch Einhaltung dieser Bedingung wird gewährleitet, dass der dritte Datenbankvektor gegenüberliegend zu dem vierten Hilfsvektor in dem Merkmalsraumes angeordnet ist. Damit wird ein genaues Ergebnis der Interpolation gewährleistet. Außerdem steht damit eine Gerade, die den ersten Datenbankvektor und den zweiten Datenbankvektor verbindet, senkrecht zu einer anderen Geraden, die den vierten Hilfsvektor und den Messvektor verbindet. Vorzugsweise wird der vierte Hilfsvektor $x_{12}$ konstruiert, so dass eine erste Ebene, welche durch Messvektor x, den ersten Datenbank-vektor $x_1$ und den zweiten Datenbankvektor $x_2$ bestimmt ist, den vierten Hilfsvektor $x_{12}$ umfasst, und wobei eine dritte Gerade, welche durch den ersten Datenbankvektor $x_1$ und den zweiten Datenbankvektor $x_2$ bestimmt ist, den vierten Hilfsvektor $x_{12}$ umfasst. Besonders bevorzugt wird der vierte Hilfsvektor $x_{12}$ so konstruiert, dass er durch die Funktion

$$x_{12} = x_1 + \alpha(x_2 - x_1)$$

bestimmt ist, mit

$$\alpha = \frac{(x-x_1)\cdot(x_2-x_1)}{(x_2-x_1)\cdot(x_2-x_1)}.$$

Es wird also vorgeschlagen, dass eine Verbindungsgerade zwischen dem ersten Datenbankvektor und dem zweiten Datenbankvektor konstruiert wird. Anschließend wird der vierte Hilfsvektor so gewählt, dass er auf einem Geradenschnittpunkt von zwei Geraden liegt, nämlich auf dem Schnittpunkt der Verbindungsgeraden und einer senkrecht zu der Verbindungsgeraden verlaufenden Geraden, die durch den Messvektor verläuft. Mit dieser Art den vierten Hilfsvektor zu konstruieren wird erreicht, dass der Messvektor in einem Zentrumsbereich zwischen dem ersten, zweiten und dritten Datenbankvektor liegt. Damit wird ein Vektorkäfig um den Messvektor aufgespannt und der Messvektor kann beispielsweise bei einer Interpolation besonders genau angenähert werden.

Vorzugsweise umfassen die Komponenten des Messvektors jeweils eine identische relative Gewichtung. Es wird also vorgeschlagen, dass die Komponenten des Messvektors, also die Messwerte oder Messdaten in dem vorgeschlagenen ML-Algorithmus vorverarbeitet werden. Dies kann auch als eine besondere Datennormalisierung aufgefasst werden. Dies kann auch als Verfahrensschritt aufgefasst werden, nämlich als Normalisieren der Komponenten des Messvektors mit einer identischen relativen Gewichtung.

Besonders bevorzugt wird die identische relative Gewichtung des Messvektors x bestimmt durch

$$x = \begin{pmatrix} x^{(1)} \\ \vdots \\ x^{(n)} \end{pmatrix} = \begin{pmatrix} (p^{(1)} - \bar{p}^{(1)})/\sigma^{(1)} \\ \vdots \\ p^{(n)} - \bar{p}^{(n)})/\sigma^{(n)} \end{pmatrix}$$

wobei $p^{(i)}$ ein einzelner Messwert des Messvektors x, $\bar{p}^{(i)}$ ein zugehöriger Mittelwert zur Verteilung $p^{(i)}$ in der Datenbank und $\sigma^{(i)}$ eine zugehörige Standardabweichung zur Verteilung $p^{(i)}$ in der Datenbank beschreibt.

Es wird also vorgeschlagen, jeden einzelnen Messwert des Messvektors mit einem Mittelwert und einer Standardabweichung zu normalisieren. Damit drücken die berechneten Distanzen eine Ähnlichkeit aus und alle Messwerte werden gleichartig gewichtet und haben den gleichen Einfluss in der Berechnung des vorgeschlagenen ML-Algorithmus, wobei sich das gewichtet auf die Gewichtung mit der Standardabweichung bezieht.

Vorzugsweise beschreiben der Indikationsparameter, der erste Referenzindikationsparameter, der zweite Referenzindikationsparameter und/oder der dritte Referenzindikationsparameter eine physikalische Größe, die eine an einem physikalischen Objekt quantitativ bestimmbare Eigenschaft eines Vorgangs und/oder Zustands charakterisiert. Eine physikalische Größe kann z. B. eine Welleneigenschaft eines Laserimpulses sein, wie z. B. die Impulsbreite oder dergleichen. In diesem Beispiel ist die physikalische Größe die Impulsbreite, die an dem physikalischen Objekt Laserimpuls den Zustand des Laserimpulses quantitativ charakterisiert. Grundsätzlich kann die physikalische Größe beliebig sein. Unter die physikalische Größe werden auch Prozess- und/oder Zustandsgrößen subsummiert, die grundsätzlich bekannt sind. Weitere Beispiele für physikalische Größen sind: Energie eines Sprachsignals, Spektrale Koeffizienten, Frequenzen, Frequenzspektren, Fourier-Koeffizienten oder Grauwerte eines Bildes oder dergleichen. Es wird damit also ein computerimplementiertes Verfahren zum Bestimmen einer physikalischen Größe eines Messvektors vorgeschlagen.

Vorzugsweise beschreiben der Indikationsparameter, der erste Referenzindikationsparameter, der zweite Referenzindikationsparameter und/oder der dritte Referenzindikationsparameter zusätzlich oder alternativ eine Ähnlichkeitsgröße, die eine quantitativ bestimmbare Ähnlichkeit eines durch den Messvektor beschriebenen Messobjektes zu einem oder mehreren Vergleichsobjekten charakterisiert. Eine Ähnlichkeitsgröße kann z. B. ein prozentualer Wert sein, der eine Ähnlichkeit eines Bildes zu einem Vergleichsbild ausdrückt. In diesem Beispiel ist die Ähnlichkeitsgröße der Prozentwert, der die quantitative Ähnlichkeit des Bildes als Datenobjekt zu einem Vergleichsobjekt charakterisiert, nämlich zu dem Vergleichsbild. Weitere Beispiele sind Wahrscheinlichkeitswerte wie Buchstabenwahrscheinlichkeit, Silbenwahrscheinlichkeit, Wortwahrscheinlichkeit, oder Klassenwahrscheinlichkeiten. Grundsätzlich kann die Ähnlichkeitsgröße also beliebig sein. Es wird damit also ein computerimplementiertes Verfahren zum Bestimmen einer Ähnlichkeitsgröße eines Messvektors vorgeschlagen.

Vorzugsweise umfasst die physikalische Größe eine oder mehrere Größen, die aus einer Gruppe ausgewählt sind, die gebildet wird aus:

- eine Welleneigenschaft einer Welle, insbesondere eine Impulsdauer, eine Impulsbreite, Phasenverschiebung, eine Wellenlänge, eine Gruppenlaufzeitdispersion, eine Wellenamplitude, oder dergleichen, insbesondere ist die Welle ein Laserimpuls. Als ein bevorzugtes Anwendungsgebiet des ML-Algorithmus wird also die Charakterisierung von Laserimpulsen vorgeschlagen. In diesem Fall wird also ein computerimplementiertes Verfahren zum Bestimmen einer Welleneigenschaft eines Laserimpulses aus einem Messvektor vorgeschlagen, wobei die Datenbankvektoren bevorzugt Ionisationswahrscheinlichen als Messwerte umfassen.

- ein biomedizinischer Wert eines biologischen Prozesses, insbesondere ein Blutzuckerwert, ein Hormonspiegelwert, eine Viruslast oder dergleichen. Als ein weiteres bevorzugtes Anwendungsgebiet des ML-Algorithmus wird also die Charakterisierung eines biologischen Prozesses vorgeschlagen. In diesem Fall wird also ein computerimplementiertes Verfahren zum Bestimmen eines biomedizinischen Wertes eines biologischen Prozesses aus einem Messvektor vorgeschlagen, wobei die Datenbankvektoren bevorzugt biomedizinische Messwerte oder Kurven umfassen. Vorstellbar sind also auch Muster oder Musterkurven wie biomedizinische Kurven vom Menschen, oder von Tieren. Die Musterkurven sind in der Datenbank gespeichert und mit dem ML-Algorithmus werden die Parameter rekonstruieren wie z. B. ein Blutzuckerwert oder ein bestimmter Hormonspiegel oder dergleichen.

Wie zuvor beschrieben, sind beliebige weitere Anwendungen denkbar, die Liste ist also eine offene Liste.

Vorzugsweise umfasst die Ähnlichkeitsgröße eine oder mehrere Größen, die aus einer Gruppe ausgewählt sind, die gebildet wird aus:

- ein Ähnlichkeitswert, der eine quantitative Ähnlichkeit eines als Messvektor erfassten Bildes mit wenigstens einem Vergleichsbild ausdrückt. Es wird also vorgeschlagen, den ML-Algorithmus für die Bildverarbeitung und Mustererkennung einzusetzen.
- ein Ähnlichkeitswert, der eine quantitative Ähnlichkeit eines als Messvektor erfassten elektrischen Signals mit einem Vergleichssignal ausdrückt. Es wird also vorgeschlagen, den ML-Algorithmus zum Charakterisieren von elektrischen Signalen oder elektrischen Größen einzusetzen, wie Strom, Spannung, Leistung, Energie Widerstand etc.
- ein Ähnlichkeitswert, der eine quantitative Ähnlichkeit eines als Messvektor erfassten Datenelements mit einem Vergleichsdatenelement ausdrückt. Es wird also vorgeschlagen, den ML-Algorithmus zum Bestimmen einer Ähnlichkeit von Datenelementen einzusetzen. Der ML-Algorithmus kann also beispielsweise zur Spracherkennung, Prosodie-Erkennung, Bildverarbeitung, Texterkennung und Textanalyse, Musterklassifikation oder dergleichen eingesetzt werden.
- ein Ähnlichkeitswert, der eine quantitative Ähnlichkeit eines als Messvektor erfassten Datenobjektes zu einer Datenklasse oder Musterklasse ausdrückt. Es wird also vorgeschlagen, den ML-Algorithmus zur Charakterisierung einer Datenklasse oder Musterklasse einzusetzen. Der Ähnlichkeitswert kann also beispielsweise ein Schätzwert eines (Daten-)Labels sein, das das Datenelement einer Datenklasse oder einer Musterklasse zuordnet.

Vorzugsweise ist die Interpolationsfunktion bestimmt durch das Polynom

$$y_1 + ae_{12} \cdot (x - x_1) + b[e_{31} \cdot (x - x_1)][e_{32} \cdot (x - x_2)],$$

mit

$$a = \frac{y_2 - y_1}{d_{21}};$$

$$b = \left[\frac{y_3 - y_1}{d_{31}} - ae_{21} \cdot e_{31}\right]/d_{32};$$

$$e_{21} = \frac{x_2 - x_1}{d_{21}}; e_{31} = \frac{x_3 - x_1}{d_{31}}; e_{32} = \frac{x_3 - x_2}{d_{32}};$$

und

$$d_{21} = |x_2 - x_1|; d_{31} = |x_3 - x_1|; d_{32} = |x_3 - x_2|.$$

Es wird also vorgeschlagen, dass der Indikationsparameters durch das Auswerten der Interpolationsfunktion $y = y_1 + ae_{12} \cdot (x - x_1) + b[e_{31} \cdot (x - x_1)][e_{32} \cdot (x - x_2)]$ bestimmt wird. Diese Funktion kann in einer Berechnungseinrichtung implementiert sein.

Gemäß einem weiteren erfindungsgemäßen Aspekt wird eine Vorrichtung zum Bestimmen eines Indikationsparameters eines Messvektors vorgeschlagen. Die Vorrichtung umfasst ein Berechnungsmittel und einen Datenspeicher, wobei in dem Datenspeicher bekannte Datenbankvektoren gespeichert sind. Das Berechnungsmittel kann auch als Berechnungseinrichtung oder Berechnungseinheit verstanden und bezeichnet werden. Das Berechnungsmittel ist zum Erfassen des Messvektors eingerichtet. Erfassen kann dabei generisch als Einlesen, Messen, Aufnehmen oder dergleichen verstanden werden. Die Berechnungseinrichtung kann beispielsweise eine CPU (Prozessor), eine GPU (Grafikprozessor) oder ein Mikrokontroller oder dergleichen sein. Der Messvektor kann also daten- oder signaltechnisch in das Berechnungsmittel eingeben werden.

Das Berechnungsmittel ist zudem zum Auswählen der bekannten Datenbankvektoren eingerichtet, und kann dazu ein Auswahlmodul aufweisen, das mittels Indizierung oder Anfragen die Datenbankvektoren auswählt.

Das Berechnungsmittel ist zudem zum Ausführungen des Verfahrens nach einer der vorstehenden oder nachstehenden Ausführungsformen ausgebildet. Dazu kann das Berechnungsmittel mit einem Berechnungsmodul ausgebildet sein. Als Modul kann ein Softwaremodul (Computerprogrammprodukt) oder ein Hardwaremodul oder eine Mischung aus beiden Modulen vorgesehen sein. In dem Berechnungsmittel kann z. B. das vorgeschlagene Verfahren als Computerprogrammprodukt implementiert sein. Auf die Erläuterungen, Definitionen und Vorteile zum Verfahren wird verwiesen.

Gemäß einem weiteren erfindungsgemäßen Aspekt wird ein Computerprogrammprodukt vorgeschlagen, umfassend Befehle, die bei der Ausführung des Computerprogrammprodukts durch einen Computer diesen veranlassen, die Schritte des Verfahrens nach einer der vorstehenden Ausführungsformen auszuführen. Auf die Erläuterungen, Definitionen und Vorteile zum Verfahren wird verwiesen.

Gemäß einem weiteren erfindungsgemäßen Aspekt wird ein computerlesbares Speichermedium vorgeschlagen, umfassend Befehle, die bei der Ausführung durch einen Computer diesen veranlassen, die Schritte des Verfahrens nach einer der vorstehenden Ausführungsformen auszuführen. Auf die Erläuterungen, Definitionen und Vorteile zum Verfahren wird verwiesen.

Gemäß einem weiteren erfindungsgemäßen Aspekt der Erfindung wird ein computerlesbarer Datenträger vorgeschlagen, auf dem das Computerprogrammprodukt nach der vorstehenden Ausführungsform gespeichert ist.

Gemäß einem weiteren erfindungsgemäßen Aspekt der Erfindung wird ein Datenträgersignal vorgeschlagen, das das Computerprogrammprodukt nach der vorstehenden Ausführungsform überträgt.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:

Fig. 1    zeigt ein schematisches Ablaufdiagramm des erfindungsgemäßen computer-implementierten Verfahrens.

Fig. 2     zeigt schematisch eine Bestimmung eines ersten Datenbankvektors $x_1$ und eines zweiten Datenbankvektors $x_2$ in einer Ausführungsform, wobei der Datenbankvektor $x_2$ in Abhängigkeit eines zweiten Hilfsvektors $x'_2$ konstruiert wird.

Fig. 3     zeigt schematisch eine Bestimmung eines ersten Datenbankvektors $x_1$, eines zweiten Datenbankvektors $x_2$ und eines dritten Datenbankvektors $x_3$ in einer Ausführungsform, wobei der dritte Datenbankvektor $x_3$ in Abhängigkeit eines dritten Hilfsvektors $x_3'$ und eines vierten Hilfsvektors $x_{12}$ konstruiert wird.

Fig. 4     zeigt einen Vergleich zwischen dem erfindungsgemäßen Verfahren (VSNIC) und der Nächster-Nachbar-Methode, wobei der bestimmte Indikationsparameter y eine physikalische Größe eines Laserimpulses beschreibt, nämlich eine Impulsdauer des Laserimpulses.

Fig. 5     zeigt einen Vergleich zwischen dem erfindungsgemäßen Verfahren (VSNIC) und der Nächster-Nachbar-Methode, wobei der bestimmte Indikationsparameter y eine physikalische Größe eines Laserimpulses beschreibt, nämlich eine spektrale Breite des Laserimpulses.

Fig. 6     zeigt einen Vergleich zwischen dem erfindungsgemäßen Verfahren (VSNIC) und der Nächster-Nachbar-Methode, wobei der bestimmte Indikationsparameter y eine physikalische Größe eines Laserimpulses beschreibt, nämlich eine Phasendifferenz des Laserimpulses zu einem Vergleichslaserimpuls.

Fig. 7     zeigt beispielhaft einen ersten und zweiten Messvektor x bzw. x'.

Fig. 8     zeigt schematisch eine Vorrichtung zum Bestimmen eines Indikationsparameters eines Messvektors in einer erfindungsgemäßen Ausführungsform.

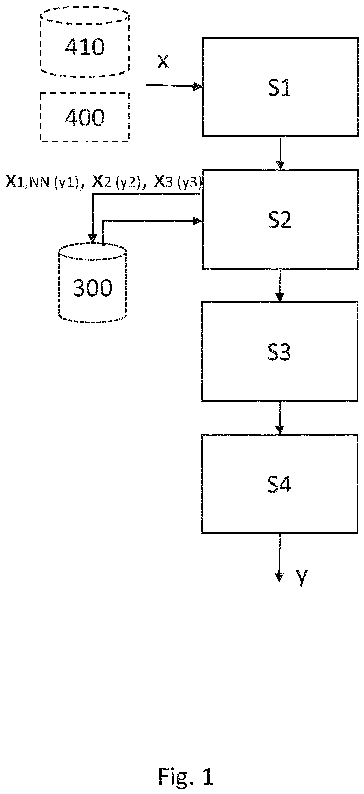

Die **Figur 1** zeigt ein Ablaufdiagramm des erfindungsgemäßen computerimplementierten Verfahrens. Mit dem computerimplementierten Verfahren erfolgt ein Bestimmen eines Indikationsparameters y eines Messvektors x.

In einem Schritt S1 erfolgt ein Erfassen des Messvektors x. Der Messvektor x kann beispielsweise von einem Erfassungsmittel 400 empfangen oder von einem Messwertspeicher 410.

In einem Schritt S2 erfolgt ein Auswählen eines ersten Datenbankvektors $x_1$ und eines zweiten Datenbankvektors $x_2$ aus einer Mehrzahl an Datenbankvektoren, die in einer Datenbank 300 gespeichert sind, wobei das Auswählen des ersten Datenbankvektors $x_1$ aus der Datenbank so erfolgt, dass der erste Datenbankvektor $x_1$ ein Nächster-Nachbar des Messvektors x ist, und das Auswählen des zweiten Datenbankvektors $x_2$ aus der Datenbank 300 in Abhängigkeit des ersten Datenbankvektors $x_1$ und des Messvektors x erfolgt, und dem ersten Datenbankvektor $x_1$ ein erster bekannter Referenzindikationsparameter $y_1$ zugeordnet ist und dem zweiten Datenbankvektor $x_2$ ein zweiter bekannter Referenzindikationsparameter $y_2$ zugeordnet ist.

In einem Schritt S3 erfolgt ein Bestimmen einer Funktion, wobei die Funktion bestimmt wird in Abhängigkeit von dem ersten Datenbankvektor $x_1$, dem zweiten Datenbankvektor $x_2$, dem ersten bekannten Referenzindikationsparameter $y_1$ und dem zweiten bekannten Referenzindikationsparameter $y_2$, nämlich so, dass das Auswerten der bestimmten Funktion an dem ersten Datenbankvektor $x_1$ den ersten bekannten Referenzindikationsparameter $y_1$ gibt und das Auswerten der Funktion an dem zweiten Datenbankvektor $x_2$ den zweiten bekannten Referenzindikationsparameter $y_2$ gibt.

In einem Schritt S4 erfolgt ein Bestimmen des Indikationsparameters y durch Auswerten der bestimmten Funktion an dem Messvektor x.

Das gezeigte Verfahren umfasst vorzugsweise weitere Schritte, wie vorstehend oder nachstehend beschrieben. Diese sind in der Figur 1 aber nicht gezeigt.

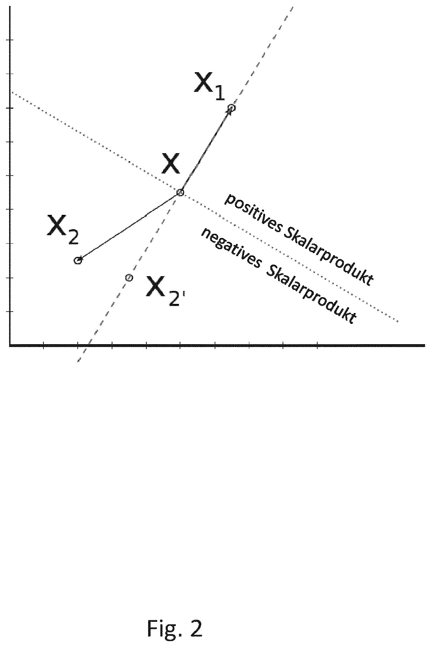

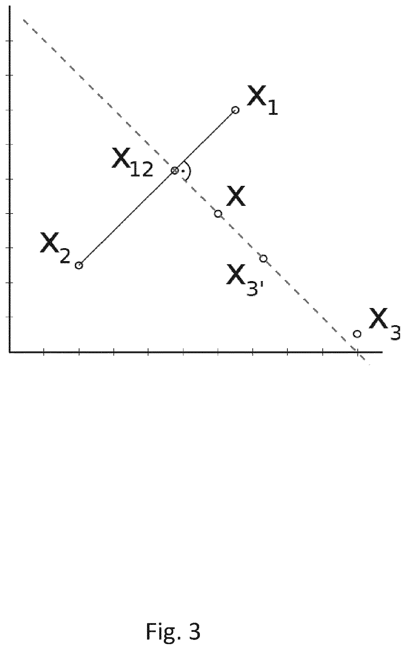

Die Figuren 2 und 3 veranschaulichen den vorgeschlagen ML-Algorithmus VSNIC in einer besonders bevorzugten Ausführungsform. Diese beiden Figuren sind im Zusammenhang zu betrachten und veranschaulichen den Ablauf des VSNIC Algorithmus.

Die **Figur 2** zeigt ein Erfassen des Messvektors x. Wie in der Figur 2 zu erkennen ist, ist der Messvektor x beispielhaft in einem zweidimensionalen Messvektorraum dargestellt.

Nach oder vor dem Erfassen erfolgt ein Normalisieren der Komponenten des Messvektors x mit einer identischen relativen Gewichtung. Dazu werden die Einträge des Messvektors x skaliert. Die identische relative Gewichtung des Messvektors x ist bestimmt durch

$$x = \begin{pmatrix} x^{(1)} \\ \vdots \\ x^{(n)} \end{pmatrix} = \begin{pmatrix} (p^{(1)} - \bar{p}^{(1)})/\sigma^{(1)} \\ \vdots \\ p^{(n)} - \bar{p}^{(n)})/\sigma^{(n)} \end{pmatrix}$$

wobei

$p^{(i)}$ ein einzelner Messwert des Messvektors x, $p^{(i)}$ ein zugehöriger Mittelwert zur Verteilung $p^{(i)}$ in der Datenbank und $\sigma^{(i)}$ eine zugehörige Standardabweichung zur Verteilung $p^{(i)}$ in der Datenbank beschreibt.

Anschließend erfolgt ein Auswählen eines ersten Datenbankvektors $x_1$ aus einer Mehrzahl an Datenbankvektoren, die in einer Datenbank gespeichert sind, wobei das Auswählen des ersten Datenbankvektors $x_1$ aus der Datenbank so erfolgt, dass der erste Datenbankvektor $x_1$ ein Nächster-Nachbar des Messvektors x ist. Der erste Datenbankvektor $x_1$ wird also durch Abstandsminimierung bestimmt, nämlich durch Minimierung einer euklidischen Distanz d, die beschreibbar ist als

$$d = |x - x_1| = \sqrt{\sum_{n=1}^{n} \left(x^{(i)} - x_1^{(i)}\right)^2}.$$

Anschließend erfolgt ein Auswählen des zweiten Datenbankvektors $x_2$ aus der Datenbank in Abhängigkeit des ersten Datenbankvektors $x_1$ und des Messvektors x. Das Auswählen des zweiten Datenbankvektors $x_2$ umfasst dabei das Auswählen des zweiten Datenbankvektors $x_2$ aus der Mehrzahl an Datenbankvektoren. Um $x_2$ zu bestimmen wird zunächst ein zweiter Hilfsvektor $x_2'$ konstruiert.

Der zweite Hilfsvektor $x_2'$ wird konstruiert in Abhängigkeit von dem ersten Datenbankvektor $x_1$ und dem Messvektor x, wie in der Figur 2 zu erkennen ist. Der zweite Hilfsvektor $x_2'$ wird so konstruiert, dass der zweite Hilfsvektor $x_2'$ in dem Messvektorraum dem ersten Datenbankvektor $x_1$ in Bezug auf den Messvektor x gegenüberliegt.

Der zweite Hilfsvektor $x_2'$ wird so konstruiert, dass der Abstand zwischen dem Messvektor x und dem zweiten Hilfsvektor $x_2'$ identisch ist zu dem Abstand zwischen dem Messvektor x und dem ersten Datenbankvektor $x_1$, und wobei eine erste Gerade (gestrichelt in Figur 2), welche durch den Messvektor x und den ersten Datenbankvektor $x_1$ bestimmt ist, den zweiten Hilfsvektor $x_2'$ umfasst. Wie zu erkennen ist, verläuft die gestrichelte Gerade durch den Messvektor x und den Datenbankvektor $x_1$ und den zweiten Hilfsvektor $x_2'$. Der zweite Hilfsvektor $x_2'$ wird also, in Abhängigkeit von dem ersten Datenbankvektor $x_1$ und von dem Messvektor x, so konstruiert, dass er durch die Funktion $x_2' = x + (x - x_1)$ = $2x - x_1$ bestimmt ist.

Nachdem der zweite Hilfsvektor $x_2'$ konstruiert ist, erfolgt ein Auswählen des zweiten Datenbankvektors $x_2$ aus der Mehrzahl an Datenbankvektoren als Nächster-Nachbar des zweiten Hilfsvektors $x_2'$. Der zweite Datenbankvektor $x_2$ wird also durch Abstandsminimierung bestimmt, nämlich durch Minimierung einer euklidischen Distanz.

Bei der Bestimmung des zweiten Datenbankvektors $x_2$ ist zu beachten, dass das Skalarprodukt aus $(x_2 - x) \cdot (x_1 - x) < 0$ erfüllt ist, also das Skalarprodukt negativ ist.

Nachdem der zweite Datenbankvektor $x_2$ nun in Abhängigkeit von dem Messvektor x und dem ersten Datenbankvektor $x_1$ und dem zweiten Hilfsvektor $x_2'$ bestimmt wurde, wird in einem weiteren Schritt der Datenbankvektor $x_3$ bestimmt. Dies wird in der Figur 3 gezeigt.

Die **Figur 3** zeigt, wie der dritte Datenbankvektor $x_3$ zum Aufspannen eines Newton-Vektorraum-Interpolationskäfig (VSNIC) bestimmt wird. Die Figur 3 zeigt ein Auswählen des dritten Datenbankvektors $x_3$ aus der Mehrzahl an Datenbankvektoren, wobei das Auswählen des dritten Datenbankvektors $x_3$ aus der Datenbank in Abhängigkeit des ersten Datenbankvektors $x_1$, des zweiten Datenbankvektors $x_2$ und des Messvektors x erfolgt, wobei dem dritten Datenbankvektor $x_3$ ein dritter bekannter Referenzindikationsparameter $y_3$ zugeordnet ist.

Ausgangspunkt für die Bestimmung bzw. das Auswählen des dritten Datenbankvektor $x_3$ sind die zuvor bestimmten Datenbankvektoren $x_1$, $x_2$.

Das Auswählen des dritten Datenbankvektors $x_3$ umfasst das Auswählen des dritten Datenbankvektors $x_3$ aus der Mehrzahl an Datenbankvektoren als den nächsten Nachbarn eines dritten Hilfsvektors $x_3'$. Um $x_3$ zu bestimmen wird also zunächst der dritte Hilfsvektors $x_3'$ konstruiert.

Der dritte Hilfsvektor $x_3'$ wird konstruiert in Abhängigkeit von einem vierten Hilfsvektor $x_{12}$ und dem Messvektor x, wie in der Figur 3 gezeigt. Der dritte Hilfsvektor $x_3'$ wird so konstruiert, dass der dritte Hilfsvektor $x_3'$ in dem Messvektorraum dem vierten Hilfsvektor $x_{12}$ in Bezug auf den Messvektor x gegenüberliegt.

Dazu wird der dritte Hilfsvektor $x_3'$ so konstruiert, dass der Abstand zwischen dem Messvektor x und dem dritten Hilfsvektor $x_3'$ identisch ist zu dem Abstand zwischen dem Messvektor x und dem vierten Hilfsvektor $x_{12}$, wobei eine zweite Gerade (gestrichelt in der Figur 3), welche durch den Messvektor x und den vierten Hilfsvektor $x_{12}$ bestimmt ist, den dritten Hilfsvektor $x_3'$ umfasst.

Der dritte Hilfsvektor $x_3'$ wird in Abhängigkeit von einem vierten Hilfsvektor $x_{12}$ und dem Messvektor x so konstruiert, dass er durch die Funktion $x'_3 = x + (x - x_{12}) = 2x - x_{12}$ bestimmt ist, und es gilt für den Messvektor x, den ersten Datenbankvektor $x_1$, den zweiten Datenbankvektor $x_2$ und den vierten Hilfsvektor $x_{12}$ gilt folgende Bedingung $(x - x_{12}) \cdot (x_2 - x_1) = 0$. Bei der Bestimmung des dritten Datenbankvektors $x_3$ ist also zu beachten, dass das Skalarprodukt aus $(x - x_{12}) \cdot (x_2 - x_1) = 0$ ist, d. h. dass der erste Vektor $(x - x_{12})$ und der zweite Vektor $(x_2 - x_1)$ senkrecht aufeinander stehen.

Um den dritten Hilfsvektor $x_3$' zu konstruieren wird also der vierte Hilfsvektor $x_{12}$ konstruiert.

Der vierte Hilfsvektor $x_{12}$ wird so konstruiert, dass eine erste Ebene, welche durch Messvektor x, den ersten Datenbankvektor $x_1$ und den zweiten Datenbankvektor $x_2$ bestimmt ist, den vierten Hilfsvektor $x_{12}$ umfasst, und wobei eine dritte Gerade (Verbindungsgerade zwischen $x_1$ und $x_2$), welche durch den ersten Datenbankvektor $x_1$ und den zweiten Datenbankvektor $x_2$ bestimmt ist, den vierten Hilfsvektor $x_{12}$ umfasst. Der vierte Hilfsvektor $x_{12}$ wird so konstruiert, dass er durch die Funktion $x_{12} = x_1 + \alpha(x_2 - x_1)$ bestimmt ist, mit

$$\alpha = \frac{(x-x_1) \cdot (x_2 - x_1)}{(x_2 - x_1) \cdot (x_2 - x_1)}.$$

Es wird also vorgeschlagen, dass eine Verbindungsgerade zwischen dem ersten Datenbankvektor $x_1$ und dem zweiten Datenbankvektor $x_2$ konstruiert wird. Anschließend wird der vierte Hilfsvektor $x_{12}$ so gewählt oder bestimmt, dass er auf einem Geradenschnittpunkt von zwei Geraden liegt, nämlich auf dem Schnittpunkt der Verbindungsgeraden und einer senkrecht zu der Verbindungsgeraden verlaufenden Geraden, die durch den Messvektor x verläuft, wie in der Figur 3 gezeigt. Mit dieser Art den vierten Hilfsvektor $x_{12}$ zu konstruieren wird erreicht, dass der Messvektor x in einem Zentrumsbereich zwischen dem ersten, zweiten und dritten Datenbankvektor $x_1$, $x_2$, $x_3$ liegt. Damit wird ein Vektorkäfig um den Messvektor x aufgespannt und der Messvektor x kann beispielsweise mit einer Interpolationsfunktion besonders genau angenähert werden.

Nachdem der dritte Hilfsvektor $x_3$' nun in Abhängigkeit von dem Messvektor x, dem ersten Datenbankvektor $x_1$ und $x_2$ bestimmt wurde, wird $x_3$ bestimmt. Der dritte Datenbankvektor $x_3$ wird durch Abstandsminimierung bestimmt, denn das Auswählen des dritten Datenbankvektors $x_3$ umfasst das Auswählen des dritten Datenbankvektors $x_3$ aus der Mehrzahl an Datenbankvektoren als den nächsten Nachbarn des dritten Hilfsvektors $x_3$'. $x_3$ ist also der Nächste-Nachbar zu $x_3$'.

So sind alle Datenbankvektoren $x_1$, $x_2$ und $x_3$ bestimmt. Der erste und zweite und der dritte Datenbankvektor $x_1$, $x_2$, $x_3$ sind damit derart ausgewählt, dass diese einen Raum in einem Messvektorraum aufspannen, welcher den Messvektor x vollständig oder teilweise umgibt.

Wie in der Figur 3 zu erkennen ist, werden der erste, zweite und dritte Datenbankvektor $x_1$, $x_2$, $x_3$ derart ausgewählt, dass diese einen Raum in dem Messvektorraum aufspannen, welcher den Messvektor x vollständig umgibt. Es wird also vorgeschlagen, den ersten, zweiten und dritten Datenbankvektor $x_1$, $x_2$, $x_3$ relativ zueinander zu positionieren, und den Messvektor in einem Zentrumsbereich zwischen den drei Datenbankvektoren anzuordnen.

Damit kann der Indikationsparameter y mittels einer Interpolationsfunktion bestimmt werden, nämlich mit

$$y = y_1 + a e_{12} \cdot (x - x_1) + b[e_{31} \cdot (x - x_1)][e_{32} \cdot (x - x_2)],$$

mit

$$a = \frac{y_2 - y_1}{d_{21}};$$

$$b = \left[\frac{y_3 - y_1}{d_{31}} - a e_{21} \cdot e_{31}\right]/d_{32};$$

$$e_{21} = \frac{x_2 - x_1}{d_{21}}; e_{31} = \frac{x_3 - x_1}{d_{31}}; e_{32} = \frac{x_3 - x_2}{d_{32}};$$

und

$$d_{21} = |x_2 - x_1|; d_{31} = |x_3 - x_1|; d_{32} = |x_3 - x_2|.$$

Zusammengefasst wird also vorgeschlagen, ausgehend von dem erfassten Messvektor x, den ersten Datenbankvektor $x_1$ als den Nächsten-Nachbarn zu dem Messvektor x zu bestimmen. Anschließend wird aus dem Messvektor x und dem ersten Datenbankvektor $x_1$ der zweite Hilfsvektor $x_2$' konstruiert, wie zuvor beschrieben. Anschließend wird $x_2$ als Nächster-Nachbar zu dem zweiten Hilfsvektor $x_2$' bestimmt. Anschließend wird der vierte Hilfsvektor $x_{12}$ aus dem ersten und zweiten Datenbankvektor $x_1$, $x_2$ und dem Messvektor x konstruiert, wie zuvor beschrieben. Anschließend wird der vierte Hilfsvektor $x_{12}$ verwendet, um den dritten Hilfsvektor $x_3$' zu konstruieren, wie zuvor beschrieben. Dann wird der dritte Datenbankvektor $x_3$ als der Nächste-Nachbar zu dem dritten Hilfsvektor $x_3$' bestimmt.

Der besondere Vorteil an diesem Verfahren ist, dass ein Vektorkäfig um den Messvektor x konstruiert wird und eine einfach bestimmbare Interpolationsfunktion genutzt werden kann, um den Messvektor x zu interpolieren bzw. um den Indikationsparameter y mittels Interpolation zu bestimmen.

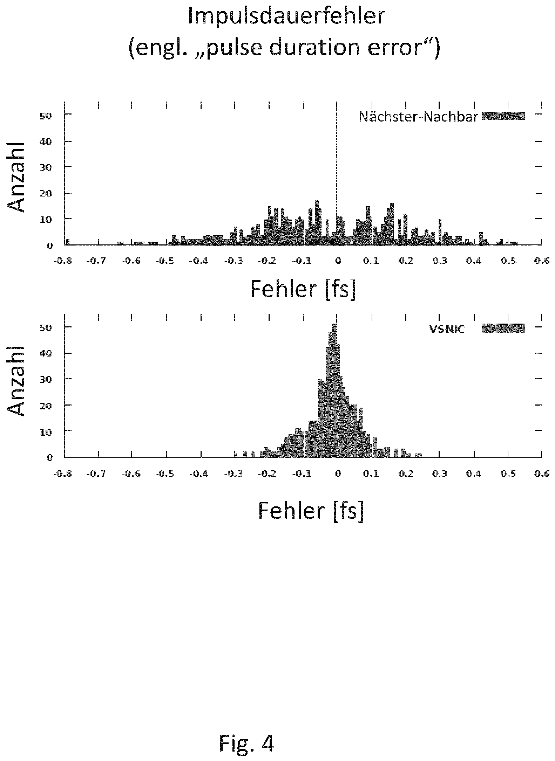

In der **Figur 4** ist die Verteilung eines Impulsdauerfehlers in Femtosekunden dargestellt. Es wurde also mit dem Verfahren die Impulsbreite eines Laserimpulses mit der Nearest-Neighbor-Methode bestimmt und im Vergleich mit dem VSNIC-Algorithmus. Das obere Feld bezieht sich auf den Nearest-Neighbor-Algorithmus, während das untere Feld den VSNIC-Algorithmus zeigt. Es ist zu erkennen, dass beim VSNIC-Algorithmus die Fehler enger um null fs herum verteilt sind und sich somit eine deutliche Verbesserung gegenüber dem Nearest-Neighbor-Algorithmus einstellt. Dies bedeutet, dass der Bedarf an kostspieligen Berechnungen zur Vergrößerung der Datenbank bei Verwendung von VSNIC reduziert werden kann.

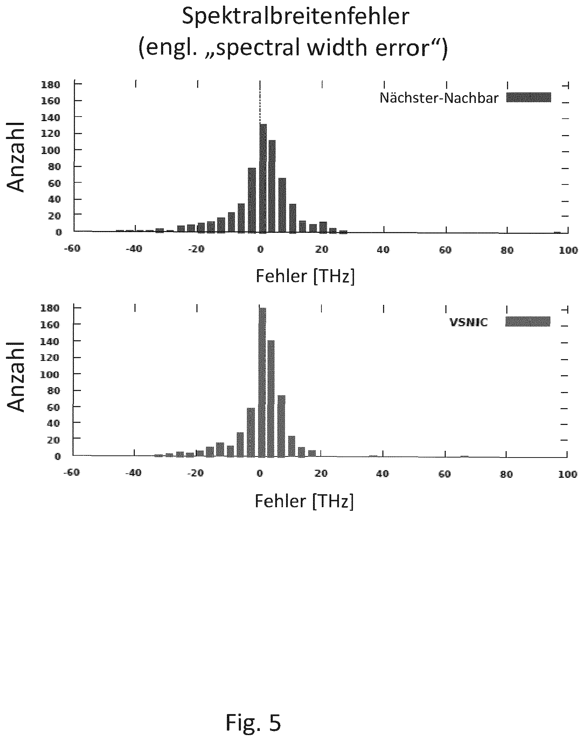

In der **Figur 5** ist die Verteilung eines Spektralbreitenfehlers in Terahertz dargestellt. Es wurde also mit dem Verfahren die spektrale Breite eines Laserimpulses mit der Nearest-Neighbor-Methode bestimmt und im Vergleich mit dem VSNIC-Algorithmus. Das obere Feld bezieht sich auf den Nearest-Neighbor-Algorithmus, während das untere Feld den VSNIC-Algorithmus zeigt. Es ist zu erkennen, dass beim VSNIC-Algorithmus die Fehler enger um null Terahertz herum verteilt sind und sich somit eine deutliche Verbesserung gegenüber dem Nearest-Neighbor-Algorithmus einstellt.

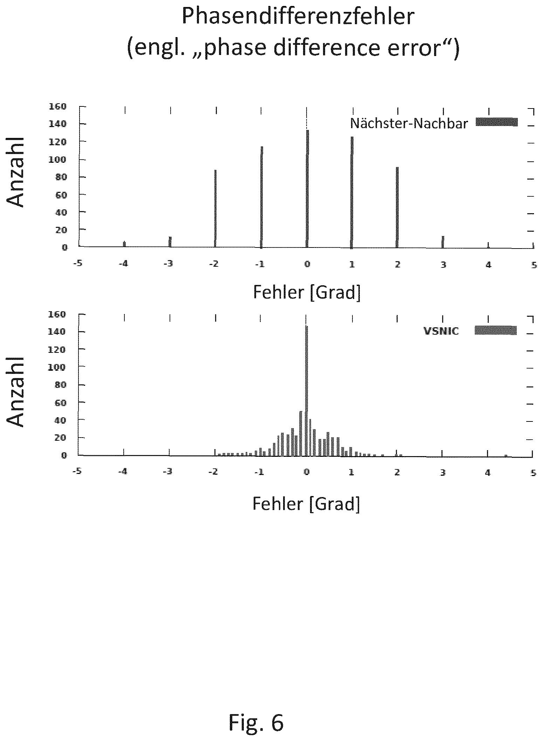

In der **Figur 6** ist die Verteilung eines Phasendifferenzfehlers in Grad dargestellt. Es wurde also mit dem Verfahren die Phasendifferenz eines Laserimpulses zu einem anderen Laserimpuls mit der Nearest-Neighbor-Methode bestimmt und im Vergleich mit dem VSNIC-Algorithmus. Das obere Feld bezieht sich auf den Nearest-Neighbor-Algorithmus, während das untere Feld den VSNIC-Algorithmus zeigt. Es ist zu erkennen, dass beim VSNIC-Algorithmus die Fehler enger um null Grad herum verteilt sind und sich somit eine deutliche Verbesserung gegenüber dem Nearest-Neighbor-Algorithmus einstellt.

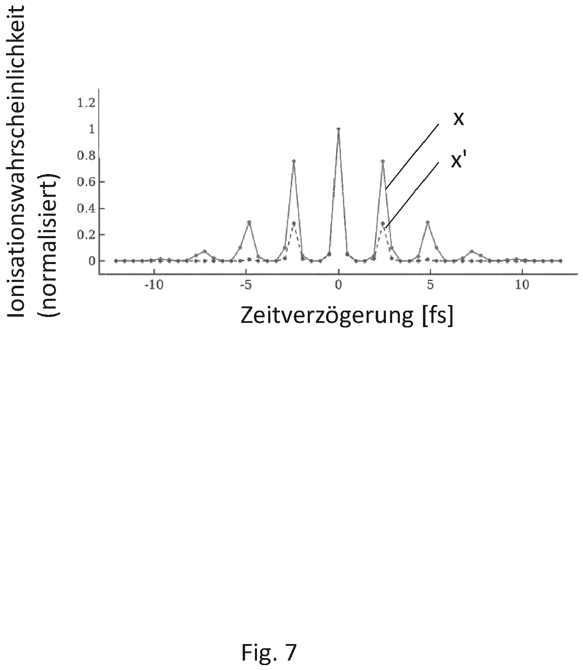

Die **Figur 7** zeigt einen Messvektor x und einen Messvektor x', die als berechnete Autokorrelationsmuster vorliegen. Beispielsweise wurde der Messvektor x bzw. das Autokorrelationsmuster für einen ersten Laserimpuls bestimmt und der Messvektor x' für einen zweiten Laserimpuls. Gezeigt sind auf der y-Achse eine Ionisationswahrscheinlichkeit und auf der x-Achse eine Zeitverzögerung. Der Messvektor x oder x' liegt also als Autokorrelationsmuster mit 51 Messwerten vor.

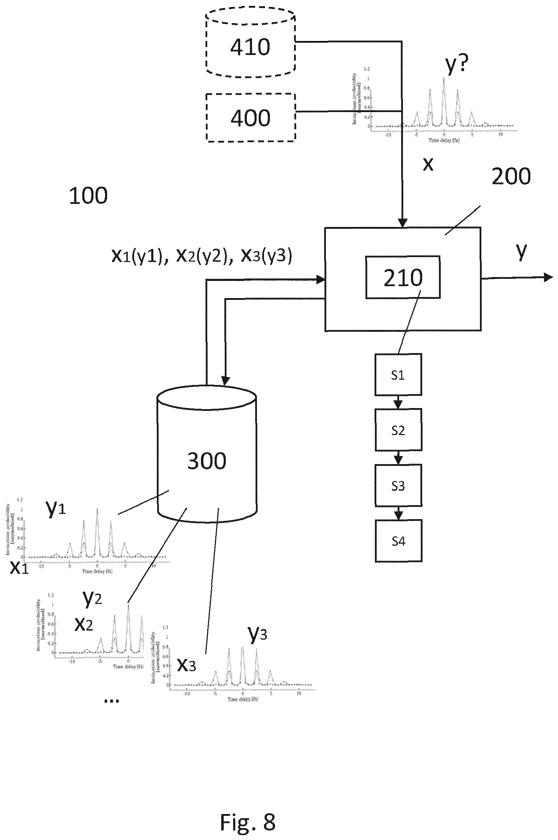

Die **Figur 8** zeigt eine Vorrichtung 100 zum Bestimmen eines Indikationsparameters y eines Messvektors x, wobei die Vorrichtung ein Berechnungsmittel 200 und einen Datenspeicher 300 umfasst, wobei in dem Datenspeicher 300 bekannte Datenbankvektoren $x_1$, $x_2$, $x_3$ gespeichert sind. Dabei ist das Berechnungsmittel 200 zum Erfassen des Messvektors x eingerichtet und das Berechnungsmittel 200 ist auch zum Auswählen der bekannten Datenbankvektoren $x_1$, $x_2$, $x_3$ eingerichtet. Das Berechnungsmittel 200 führt mit einem Berechnungsmodul 210 das Verfahren nach einer der vorstehenden Ausführungsformen aus, was schematisch durch das Ablaufdiagramm veranschaulicht ist. Der Datenspeicher 300 umfasst dabei die bekannten Datenbankvektoren $x_1$, $x_2$, $x_3$, die beispielsweise als bekannte Autokorrelationsmuster in der Datenbank gespeichert sein können, wie in der Figur 7 gezeigt. Der Messvektor x kann beispielsweise ein gemessenes Autokorrelationsmuster, das anhand der bekannten Autokorrelationsmuster charakterisiert werden soll. Die Messdaten des gemessenen Autokorrelationsmusters sind also bekannt, aber die Eigenschaften des Autokorrelationsmusters sind unbekannt, d. h. dessen Indikationsparameter sind unbekannt. Zudem sind in der Figur 8 ein Erfassungsmittel 400 oder ein Messwertspeicher 410 gezeigt, von denen der Messvektor x empfangen wird.

In den Formeln beziehen sich fettgedruckte Buchstaben auf vektorielle Größen oder Matrizen.

Bezugszeichenliste

| | |
|---|---|
| x | Messvektor |
| y | Indikationsparameter |
| $y_1$ | erster Referenzindikationsparameter |
| $y_2$ | zweiter Referenzindikationsparameter |
| $y_3$ | dritter Referenzindikationsparameter |
| $x_1$ | erster Datenbankvektor |
| $x_2$ | zweiter Datenbankvektor |

| $x_3$ | dritter Datenbankvektor |
|---|---|
| $x_2'$ | zweiter Hilfsvektor |
| $x_3'$ | dritter Hilfsvektor |
| $x_{12}$ | vierter Hilfsvektor |
| 100 | Vorrichtung |
| 200 | Berechnungsmittel |
| 210 | Berechnungsmodul |
| 300 | Datenspeicher |
| 400 | Erfassungsmittel |
| 410 | Messwertspeicher |

**Patentansprüche**

1. Computerimplementiertes Verfahren zum Bestimmen eines Indikationsparameters (y) eines Messvektors (x), umfassend die Schritte:

   - Erfassen (S1) des Messvektors (x);
   - Auswählen (S2) eines ersten Datenbankvektors ($x_1$) und eines zweiten Datenbankvektors ($x_2$) aus einer Mehrzahl an Datenbankvektoren, die in einer Datenbank gespeichert sind, wobei

      - das Auswählen des ersten Datenbankvektors ($x_1$) aus der Datenbank so erfolgt, dass der erste Datenbankvektor ($x_1$) ein Nächster-Nachbar des Messvektors (x) ist, und
      - das Auswählen des zweiten Datenbankvektors ($x_2$) aus der Datenbank in Abhängigkeit des ersten Datenbankvektors ($x_1$) und des Messvektors (x) erfolgt, und
      - dem ersten Datenbankvektor ($x_1$) ein erster bekannter Referenzindikationsparameter ($y_1$) zugeordnet ist und
      - dem zweiten Datenbankvektor ($x_2$) ein zweiter bekannter Referenzindikationsparameter ($y_2$) zugeordnet ist;

   - Bestimmen (S3) einer Funktion,

      - wobei die Funktion bestimmt wird in Abhängigkeit von dem ersten Datenbankvektor ($x_1$), dem zweiten Datenbankvektor ($x_2$), dem ersten bekannten Referenzindikationsparameter ($y_1$) und dem zweiten bekannten Referenzindikationsparameter ($y_2$), nämlich so, dass
      - das Auswerten der bestimmten Funktion an dem ersten Datenbankvektor ($x_1$) den ersten bekannten Referenzindikationsparameter ($y_1$) gibt und
      - das Auswerten der Funktion an dem zweiten Datenbankvektor ($x_2$) den zweiten bekannten Referenzindikationsparameter ($y_2$) gibt; und

   - Bestimmen (S4) des Indikationsparameters (y) durch Auswerten der bestimmten Funktion an dem Messvektor (x).

2. Verfahren nach Anspruch 1, weiter umfassend:

   - Auswählen eines dritten Datenbankvektors ($x_3$) aus der Mehrzahl an Datenbankvektoren, wobei

      das Auswählen des dritten Datenbankvektors ($x_3$) aus der Datenbank in Abhängigkeit des ersten Datenbankvektors ($x_1$), des zweiten Datenbankvektors ($x_2$) und des Messvektors (x) erfolgt, wobei
      dem dritten Datenbankvektor ($x_3$) ein dritter bekannter Referenzindikationsparameter ($y_3$) zugeordnet ist; und
      die Funktion bestimmt wird in Abhängigkeit von dem ersten, zweiten und dritten Datenbankvektor ($x_1$, $x_2$, $x_3$) und dem ersten, zweiten und dritten bekannten Referenzindikationsparameter ($y_1$, $y_2$, $y_3$), und
      das Auswerten der Funktion an dem dritten Datenbankvektor ($x_3$) den dritten bekannten Referenzindikationsparameter ($y_3$) gibt, und wobei
      der erste, zweite und dritte Datenbankvektor ($x_1$, $x_2$, $x_3$) derart ausgewählt werden, dass diese einen Raum in einem Messvektorraum aufspannen, welcher den Messvektor (x) vollständig oder teilweise umgibt.

**3.** Verfahren nach einem der Ansprüche 1 - 2, wobei

(i) der erste Datenbankvektor ($x_1$), der zweite Datenbankvektor ($x_2$) und/oder der dritte Datenbankvektor ($x_3$) durch Abstandsminimierung bestimmt werden, insbesondere durch Minimierung einer euklidischen Distanz d, die beschreibbar ist als

$$d = |\boldsymbol{x} - \boldsymbol{x_1}| = \sqrt{\sum_{i=1}^{n}\left(x^{(i)} - x_1^{(i)}\right)^2};$$

und/oder
(ii) die Funktion eine Interpolationsfunktion ist, insbesondere ist die Funktion ein quadratisches Newton Polynom, ein Lagrange-Polynom oder dergleichen; und/oder
(iii) wobei die Funktion eine Gewichtungsfunktion ist.

**4.** Verfahren nach einem der Ansprüche 1 - 3, wobei

- das Auswählen des zweiten Datenbankvektors ($x_2$) umfasst das Auswählen des zweiten Datenbankvektors ($x_2$) aus der Mehrzahl an Datenbankvektoren als den nächsten Nachbarn eines zweiten Hilfsvektors ($x_2$'), vorzugsweise wird der zweite Datenbankvektor ($x_2$) bei einer Interpolation so ausgewählt, dass das Skalarprodukt des Messvektors x, des ersten Datenbankvektors $x_1$ und des zweiten Datenbankvektors $x_2$ die folgende Bedingung erfüllt *($x_2$ - x) · ($x_1$ - x) < 0;*
und/oder
- das Auswählen des dritten Datenbankvektors ($x_3$) umfasst das Auswählen des dritten Datenbankvektors ($x_3$) aus der Mehrzahl an Datenbankvektoren als den nächsten Nachbarn eines dritten Hilfsvektors ($x_3$'), vorzugsweise wird der dritte Datenbankvektor ($x_3$) bei einer Interpolation so ausgewählt, dass das Skalarprodukt des Messvektors (x), des dritten Datenbankvektors ($x_3$) und eines vierten Hilfsvektors ($x_{12}$) die folgende Bedingung erfüllt: *($x_3$ - x) · ($x_{12}$ - x) < 0,* und

weiter vorzugsweise
wird der erste und zweite und optional der dritte Datenbankvektor ($x_1$, $x_2$, $x_3$) derart ausgewählt werden, dass diese einen Raum in einem Messvektorraum aufspannen, welcher den Messvektor (x) vollständig oder teilweise umgibt.

**5.** Verfahren nach Anspruch 4, wobei der zweite Hilfsvektor ($x_2$') konstruiert wird in Abhängigkeit von dem ersten Datenbankvektor ($x_1$) und dem Messvektor (x),

vorzugsweise wird der zweite Hilfsvektor ($x_2$') so konstruiert, dass der zweite Hilfsvektor ($x_2$') in einem Messvektorraum dem ersten Datenbankvektor ($x_1$) in Bezug auf den Messvektor (x) gegenüberliegt,
weiter vorzugsweise wird derzweite Hilfsvektor ($x_2$') so konstruiert, dass der Abstand zwischen dem Messvektor (x) und dem zweiten Hilfsvektor ($x_2$') identisch ist zu dem Abstand zwischen dem Messvektor (x) und dem ersten Datenbankvektor ($x_1$), und wobei eine erste Gerade, welche durch den Messvektor (x) und den ersten Datenbankvektor ($x_1$) bestimmt ist, den zweiten Hilfsvektor ($x_2$') umfasst, insbesondere wird der zweite Hilfsvektor ($x_2$') in Abhängigkeit von dem ersten Datenbankvektors ($x_1$) und dem Messvektor (x), so konstruiert, dass er durch die Funktion

$$x_2' = x + \gamma(x - x_1)$$

bestimmt ist, wobei *y* ein Faktor ist, insbesondere ist der Faktor $\gamma$ = 1 und **$x_2$'** ergibt sich zu **$x_2$'= 2x - $x_1$.**

**6.** Verfahren nach einem der Ansprüche 4 oder 5, wobei der dritte Hilfsvektor ($x_3$') konstruiert wird in Abhängigkeit von einem vierten Hilfsvektor ($x_{12}$) und dem Messvektor (x),

vorzugsweise wird der dritte Hilfsvektor ($x_3$') so konstruiert, dass der dritte Hilfsvektor ($x_3$') in einem Messvektorraum dem vierten Hilfsvektor ($x_{12}$) in Bezug auf den Messvektor (x) gegenüberliegt,
vorzugsweise wird der dritte Hilfsvektor ($x_3$') so konstruiert, dass der Abstand zwischen dem Messvektor (x) und dem dritten Hilfsvektor ($x_3$') identisch ist zu dem Abstand zwischen dem Messvektor (x) und dem vierten Hilfsvektor ($x_{12}$), und wobei eine zweite Gerade, welche durch den Messvektor (x) und den vierten Hilfsvektor

$(x_{12})$ bestimmt ist, den dritten Hilfsvektor $(x_3')$ umfasst, insbesondere wird der dritte Hilfsvektor $(x_3')$ in Abhängigkeit von einem vierten Hilfsvektor $(x_{12})$ und dem Messvektor $(x)$ so konstruiert, dass er durch die Funktion

$$x_3' = x + \gamma(x - x_{12})$$

bestimmt ist, wobei $\gamma$ ein Faktor ist, insbesondere ist der Faktor $\gamma = 1$ und $x_3'$ ergibt sich zu $\mathbf{x_3' = 2x - x_{12}}$; und insbesondere gilt für den Messvektor $x$, den ersten Datenbankvektor $x_1$, den zweiten Datenbankvektor $x_2$ und den vierten Hilfsvektor $x_{12}$ bei einer Interpolation folgende Bedingung $(x - x_{12}) \cdot (x_2 - x_1) = 0$.

7. Verfahren nach Anspruch 6, wobei der vierte Hilfsvektor $(x_{12})$ konstruiert wird, so dass eine erste Ebene, welche durch Messvektor $(x)$, den ersten Datenbankvektor $(x_1)$ und den zweiten Datenbankvektor $(x_2)$ bestimmt ist, den vierten Hilfsvektor $(x_{12})$ umfasst, und wobei eine dritte Gerade, welche durch den ersten Datenbankvektor $(x_1)$ und den zweiten Datenbankvektor $(x_2)$ bestimmt ist, den vierten Hilfsvektor $(x_{12})$ umfasst,

insbesondere wird der vierte Hilfsvektor $(x_{12})$ so konstruiert, dass er durch die Funktion

$$x_{12} = x_1 + \alpha(x_2 - x_1)$$

bestimmt ist, mit

$$\alpha = \frac{(x - x_1) \cdot (x_2 - x_1)}{(x_2 - x_1) \cdot (x_2 - x_1)}.$$

8. Verfahren nach einem der Ansprüche 1 - 7, wobei die Komponenten des Messvektors $(x)$ jeweils eine identische relative Gewichtung umfassen, insbesondere wird die identische relative Gewichtung des Messvektors $x$ bestimmt durch

$$x = \begin{pmatrix} x^{(1)} \\ \vdots \\ x^{(n)} \end{pmatrix} = \begin{pmatrix} (p^{(1)} - \bar{p}^{(1)})/\sigma^{(1)} \\ \vdots \\ p^{(n)} - \bar{p}^{(n)})/\sigma^{(n)} \end{pmatrix}$$

wobei

$p^{(i)}$ ein einzelner Messwert des Messvektors $x$, $\bar{p}^{(i)}$ ein zugehöriger Mittelwert zur Verteilung $p^{(i)}$ in der Datenbank und $\sigma^{(i)}$ eine zugehörige Standardabweichung zur Verteilung $p^{(i)}$ in der Datenbank beschreibt.

9. Verfahren nach einem der Ansprüche 1 - 8, wobei der Indikationsparameter $(y)$, der erste Referenzindikationsparameter $(y_1)$, der zweite Referenzindikationsparameter $(y_2)$ und/oder der dritte Referenzindikationsparameter $(y_3)$ folgendes beschreiben:

- eine physikalische Größe, die eine an einem physikalischen Objekt quantitativ bestimmbare Eigenschaft eines Vorgangs und/oder Zustands charakterisiert, und/oder
- eine Ähnlichkeitsgröße, die eine quantitativ bestimmbare Ähnlichkeit eines durch den Messvektor beschriebenen Datenobjektes zu einem oder mehreren Vergleichsobjekten charakterisiert.

10. Verfahren nach Anspruch 9, wobei

(i) die physikalische Größe eine oder mehrere Größen umfasst, die aus einer Gruppe ausgewählt sind, die gebildet wird aus:

- eine Welleneigenschaft einer Welle, insbesondere eine Impulsdauer, eine Impulsbreite, Phasenverschiebung, eine Wellenlänge, eine Gruppenlaufzeitdispersion, eine Wellenamplitude, oder dergleichen, insbesondere ist die Welle ein Laserimpuls;
- ein biomedizinischer Wert eines biologischen Prozesses, insbesondere Blutzucker, Hormonspiegel, Viruslast oder dergleichen; und/oder

(ii) die Ähnlichkeitsgröße eine oder mehrere Größen umfasst, die aus einer Gruppe ausgewählt sind, die gebildet wird aus:

- ein Ähnlichkeitswert, der eine quantitative Ähnlichkeit eines als Messvektor erfassten Bildes mit wenigstens einem Vergleichsbild ausdrückt,
- ein Ähnlichkeitswert, der eine quantitative Ähnlichkeit eines als Messvektor erfassten elektrischen Signals mit einem Vergleichssignal ausdrückt,
- ein Ähnlichkeitswert, der eine quantitative Ähnlichkeit eines als Messvektor erfassten Datenelements mit einem Vergleichsdatenelement ausdrückt,
- ein Ähnlichkeitswert, der eine quantitative Ähnlichkeit eines als Messvektor erfassten Datenobjektes zu eine Datenklasse oder Musterklasse ausdrückt.

**11.** Verfahren nach Anspruch 1 bis 10, wobei die Interpolationsfunktion bestimmt ist durch das Polynom

$$y_1 + a e_{12} \cdot (x - x_1) + b[e_{31} \cdot (x - x_1)][e_{32} \cdot (x - x_2)],$$

mit

$$a = \frac{y_2 - y_1}{d_{21}};$$

$$b = \left[\frac{y_3 - y_1}{d_{31}} - a e_{21} \cdot e_{31}\right]/d_{32};$$

$$e_{21} = \frac{x_2 - x_1}{d_{21}}; \; e_{31} = \frac{x_3 - x_1}{d_{31}}; \; e_{32} = \frac{x_3 - x_2}{d_{32}};$$

und

$$d_{21} = |x_2 - x_1|; \; d_{31} = |x_3 - x_1|; \; d_{32} = |x_3 - x_2|.$$

**12.** Vorrichtung (100) zum Bestimmen eines Indikationsparameters (y) eines Messvektors (x), wobei die Vorrichtung ein Berechnungsmittel (200) und einen Datenspeicher (300) umfasst, wobei in dem Datenspeicher bekannte Datenbankvektoren ($x_1, x_2, x_3$) gespeichert sind und wobei das Berechnungsmittel (100) zum Erfassen des Messvektors eingerichtet ist und das Berechnungsmittel (100) zum Auswählen der bekannten Datenbankvektoren ($x_1, x_2, x_3$) eingerichtet ist, **dadurch gekennzeichnet, dass** das Berechnungsmittel (200) mit einem Berechnungsmodul (210) zum Ausführungen des Verfahrens nach einem der Verfahren 1 bis 11 eingerichtet ist.

**13.** Computerprogrammprodukt, umfassend Befehle, die bei der Ausführung des Computerprogrammprodukts durch einen Computer diesen veranlassen, die Schritte des Verfahrens nach einem der Ansprüche 1 - 11 auszuführen.

**14.** Computerlesbares Speichermedium, umfassend Befehle, die bei der Ausführung durch einen Computer diesen veranlassen, die Schritte des Verfahrens nach einem der Ansprüche 1 - 11 auszuführen.

**15.** Computerlesbarer Datenträger, auf dem das Computerprogrammprodukt nach Anspruch 13 gespeichert ist oder Datenträgersignal, das das Computerprogrammprodukt nach Anspruch 13 überträgt.

Fig. 1

Fig. 2

Fig. 3

Fig. 4

## Spektralbreitenfehler
## (engl. „spectral width error")

Fig. 5

# Phasendifferenzfehler
# (engl. „phase difference error")

Fig. 6

Fig. 7

Fig. 8

**EUROPÄISCHER RECHERCHENBERICHT**

Europäisches Patentamt
European Patent Office
Office européen des brevets

Nummer der Anmeldung

EP 22 18 7574

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BECKMANN MARCELO ET AL: "A KNN Undersampling Approach for Data Balancing", JOURNAL OF INTELLIGENT LEARNING SYSTEMS AND APPLICATIONS, Bd. 07, Nr. 04, 1. November 2015 (2015-11-01), Seiten 104-116, XP093010981, ISSN: 2150-8402, DOI: 10.4236/jilsa.2015.74010 * Seite 104 – Seite 115, Absatz 2 * ───── | 1-15 | INV. G06N7/00 ADD. G06N20/00 |
| A | Hecht Michael ET AL: "Arxiv Preprint Multivariate Newton Interpolation", , 19. März 2020 (2020-03-19), XP093010980, Gefunden im Internet: URL:https://arxiv.org/pdf/1812.04256.pdf [gefunden am 2023-01-02] * das ganze Dokument * ───── | 1-15 | |
| A | WO 2016/149147 A1 (QUALCOMM INC [US]) 22. September 2016 (2016-09-22) * das ganze Dokument * ───── | 1-15 | RECHERCHIERTE SACHGEBIETE (IPC) G06N |
| T | GEFFERT OTFRIED ET AL: "In situ characterization of few-femtosecond laser pulses by learning from first-principles calculations", OPTICS LETTERS, Bd. 47, Nr. 16, 3. August 2022 (2022-08-03), Seite 3992, XP093010941, US ISSN: 0146-9592, DOI: 10.1364/OL.460513 * das ganze Dokument * ───── | 1-15 | |

Der vorliegende Recherchenbericht wurde für alle Patentansprüche erstellt

| Recherchenort | Abschlußdatum der Recherche | Prüfer |
|---|---|---|
| Den Haag | 3. Januar 2023 | Volkmer, Markus |

## ANHANG ZUM EUROPÄISCHEN RECHERCHENBERICHT
## ÜBER DIE EUROPÄISCHE PATENTANMELDUNG NR.

EP 22 18 7574

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-01-2023

| Im Recherchenbericht angeführtes Patentdokument | Datum der Veröffentlichung | Mitglied(er) der Patentfamilie | Datum der Veröffentlichung |
|---|---|---|---|
| WO 2016149147 A1 | 22-09-2016 | CN 107430705 A | 01-12-2017 |
| | | EP 3271873 A1 | 24-01-2018 |
| | | US 2016275414 A1 | 22-09-2016 |
| | | WO 2016149147 A1 | 22-09-2016 |

EPO FORM P0461

Für nähere Einzelheiten zu diesem Anhang : siehe Amtsblatt des Europäischen Patentamts, Nr.12/82